# EUROPEAN PATENT SPECIFICATION

(11) **EP 2 692 423 B1**
(45) Date of publication and mention of the grant of the patent: **15.01.2020**
(21) Application number: 12765055.4
(22) Date of filing: 29.03.2012
(51) Int. Cl.: B01J 2/00, B01J 13/00

(54) **DEVICE FOR PRODUCING COMPOSITE PARTICLES**
VORRICHTUNG ZUR HERSTELLUNG VON VERBUNDPARTIKELN
DISPOSITIF DE PRODUCTION DE PARTICULES COMPOSITES

(30) Priority: 31.03.2011 JP 2011081322
(43) Date of publication of application: 05.02.2014
(73) Proprietor: National University Corporation Toyohashi University of Technology, Toyohashi-shi Aichi 441-8580 (JP)
(72) Inventor: MUTO Hiroyuki, Toyohashi-shi Aichi 441-8580 (JP); HAKIRI Norio, Toyohashi-shi Aichi 441-8580 (JP); MATSUDA Atsunori, Toyohashi-shi Aichi 441-8580 (JP); KAWAMURA Go, Toyohashi-shi Aichi 441-8580 (JP)
(74) Representative: Kuhnen & Wacker Patent- und Rechtsanwaltsbüro PartG mbB
(86) International application number: PCT/JP2012/058453
(87) International publication number: WO 2012/133696

(56) References cited:
- EP-A1- 2 172 517
- JP-A- 62 213 839
- JP-A- 63 156 060
- JP-A- 2002 506 719
- JP-A- 2003 340 269
- JP-A- 2010 037 146
- JP-A- 2010 064 945
- US-A- 5 344 487
- US-A- 5 454 864
- DATABASE WPI Week 201014 5 August 2008 (2008-08-05) Thomson Scientific, London, GB; AN 2010-B81473 XP002750839, & JP 2010 037146 A (NIPPONDENSO CO LTD) 18 February 2010 (2010-02-18)
- HIROYUKI MUTO: 'Fabrication of integrated composite particles by electrostatic adsorption technique and microstructural control of functional nanocomposits' FRAGRANCE JOURNAL vol. 38, no. 7, 15 July 2010, pages 52 - 57, XP008171418
- HIROYUKI MUTO: 'Seiden Kyuchaku Fukugoho ni yoru Fukugo Biryushi no Chosei to Shinki Fukugo Zairyo no Sosei' CHEMICAL ENGINEERIG vol. 54, no. 8, 01 August 2009, pages 47 - 51, XP008171396
- HIROYUKI MUTO ET AL.: 'Development of integrated composite particles via electrostatic adsorption assembly technique' THE JOURNAL OF IMAGING SOCIETY OF JAPAN vol. 50, no. 4, 10 August 2011, pages 313 - 318, XP008171417

## Description

### Technical Field

The present invention relates to a device for producing composite particles, and more particularly to a device capable of producing composite particles with ease and efficiency by optimizing the amount of a control agent to be added for controlling a surface charge of particles.

### Background Art

Mechanical mixing, which is to mix two or more kinds of raw material particles by a ball mill or the like, is generally known as a method for fabricating composite particles. However, it is difficult for mechanical mixing such as ball milling to avoid raw material contamination or improve yield rate of target composite particles. Under these circumstances, PTL 1 and PTL 2 disclose a technique of fabricating composite particles by dispersing one group of particles and the other group of particles to be composited in liquid phase whose pH has been controlled so as to cause the respective groups of particles to have surface charges of opposite polarity and allowing these groups of particles to stick to each other by electrostatic attraction.

Furthermore, the applicant of the present invention developed a technique capable of compositing a variety of kinds of particles by arbitrarily controlling polarity (positive or negative polarity) of a surface charge of particles by coating the particles dispersed in liquid phase with a polymer electrolyte (PTL 3). This technique enables fabrication of composite particles even when it is difficult to give opposite polarities to raw material particles by pH control, for example, when one group of particles and the other group of particles to be composited are of the same kind.

### Citation List

### Patent Literature

PTL 1: Japanese Patent Publication JP 2005 306 635 A
PTL 2: Japanese Publication of Translation of PCT Application WO 2010/525 930 A
PTL 3: Japanese Patent Publication JP 2010 064 945 A
PTL 4: JP 2010 037 146 A

Other prior art: XP002750839, Database WPI, 5 August 2008, Thomson Scientific, London, GB, AN 2010-B81473

### Summary of Invention

### Technical Problem

In the technique disclosed by PTL 1, however, since surface polarity of the one group and that of the other group of particles are controlled by pH control, surface charge control depends heavily on properties of raw material particles and selection of the raw material particles is limited. Besides, in the techniques disclosed by PTL 2 and PTL 3, when a surface charge is controlled by polyacrylic acid or other polymer electrolytes, there is a need to remove excess polyacrylic acid or the like which is not adsorbed on particle surfaces. When the amount of polyacrylic acid or the like added is not sufficient, formation of composite particles has a general tendency to be unfavorable, so polyacrylic acid or the like is added in excess. On the other hand, if removal of excess polyacrylic acid or the like is in short, it may pose an obstacle to formation of composite particles. Accordingly, these techniques have a problem that an operation to remove excess polyacrylic acid or the like has to be performed and procedure for fabricating composite particles is complicated and inefficient. In particular because this removal operation is executed by centrifugal separation, these techniques have a problem that this removal operation makes continuous production of composite particles difficult. These techniques have another problem: a cleaning operation is effective to sufficiently remove excess polyacrylic acid or the like, but if such a cleaning operation is to be repeated for a purpose of sufficient cleaning, a centrifugal separation operation must be carried out every time the cleaning operation is carried out, and as a result workability deteriorates all the more.

Additionally, the technique of PTL 2 discloses that each of one group and the other group of particles to be composited are controlled to have an electric charge of opposite polarity by pH control and polymer electrolyte addition, but does not give any consideration to an effect of excess polymer electrolyte remaining in liquid. Therefore, the technique of PTL 2 cannot solve the problem of an excess additive to improve composite particle production efficiency. PTL 4 and XP002750839 disclose a generic method and device to obtain a dispersion slurry including two populations of particles, one alumina and one yttria, and subsequent control of the pH.

Therefore, it is an object of the present invention to provide a device for producing composite particles capable of suppressing the amount of a control agent to be added for controlling a surface charge of particles such as a polymer electrolyte from being in excess or short and accordingly improving workability and production efficiency.

### Solution to Problem

Therefore, the present inventors have conducted earnest researches and, as a result, have completed the following invention as defined in the set of claims.

A first structure of the invention relating to a device for producing composite particles is a device for producing composite particles by causing a first group of particles and a second group of particles to stick to each other by electrostatic attraction, wherein the production device comprises: a reservoir tank for holding liquid containing either one of the first group of particles and the second group of particles; dispersion state measuring means for measuring a dispersion state of the particles in the liquid held in the reservoir tank; dispersion state storing means for storing the dispersion state measured by the dispersion state measuring means when a control agent for controlling a surface charge of the particles contained in the liquid in the reservoir tank is added into the reservoir tank; and information outputting means for outputting information indicating that the dispersion state of the particles in the liquid in the reservoir tank is a desired state, based on the dispersion state stored in the dispersion state storing means.

Measurement by the dispersion state measuring means includes measurement of a direct or indirect index of a dispersion state of the particles in the liquid. Examples of such an index include a surface charge of particles, optical characteristics (turbidity, light transmittance, light scattering intensity) of a suspension, electric conductivity, viscosity of a suspension. With regard to the dispersion state of the particles in the liquid, a measured value can be regarded as the dispersion state of the particles, and a value obtained by performing arithmetic processing for grasping the dispersion state of the particles onto the measured value can also be regarded as the dispersion state of the particles. In addition, the phrase "the dispersion state is a desired state" means that the particles are dispersed at the highest level or a level close to the highest.

A second structure of the invention relating to the device for producing composite particles is a device for producing composite particles by causing a first group of particles and a second group of particles to stick to each other by electrostatic attraction, wherein the production device comprises: a plurality of reservoir tanks for holding liquid containing either one of the first group and the second group of particles; dispersion state measuring means for measuring a dispersion state of the particles in the liquid held in each of the reservoir tanks; dispersion state storing means for storing the dispersion state measured by the dispersion state measuring means when each control agent for controlling a surface charge of the particles contained in the liquid in each of the reservoir tanks is added into each of the reservoir tanks; information outputting means for outputting information indicating that the dispersion state of the particles in the liquid in each of the reservoir tanks is a desired state, based on the dispersion state stored in the dispersion state storing means; a transfer pipe for transferring liquid containing particles to be transferred from one to the other of the reservoir tank holding the liquid containing the first group of particles and the reservoir tank holding the liquid containing the second group of particles; a transfer pump for transferring the liquid containing particles to be transferred from the one reservoir tank to the other reservoir tank through the transfer pipe; and driving means for driving the transfer pump based on the information output by the information outputting means.

A third structure of the invention relating to the device for producing composite particles is one of the first and the second structures wherein the device further comprises: adding means for adding the control agent to the reservoir tank; addition stopping means for stopping the addition of the control agent by the adding means; state change deriving means for deriving a change in the dispersion state based on the dispersion state stored in the dispersion state storing means; and determining means for determining whether the dispersion state of the particles in the liquid in the reservoir tank is the desired state based on the change in the dispersion state derived by the state change deriving means; and the information outputting means outputs, to the addition stopping means, the information indicating that the dispersion state of the particles in the liquid in the reservoir tank is the desired state when the determining means determines that the dispersion state stored in the dispersion state storing means is the desired state; and the addition stopping means stops the addition of the control agent based on the information from the information outputting means.

A fourth structure of the invention relating to the device for producing composite particles is any one of the first to the third structures wherein the dispersion state measuring means is viscosity measuring means.

A fifth structure of the invention relating to the device for producing composite particles is the fourth structure wherein the viscosity measuring means is comprised of a dynamic viscometer.

A sixth structure of the invention relating to the device for producing composite particles is any one of the first to the fifth structure further comprising stirring means disposed in the reservoir tank and stirring the liquid containing the particles in the reservoir tank.

A first non-claimed structure relating to a process for producing composite particles is a process for producing composite particles by causing a first group of particles and a second group of particles to stick to each other by electrostatic attraction, wherein the process includes: an electric charge controlling step of controlling a surface charge of at least one of the first group and the second group of particles so that the surface charge of the one of the first group and the second group of particles has opposite polarity to polarity of a surface charge of the other group of particles; and a mixing step of mixing the first group of particles and the second group of particles after the surface change is controlled in the electric charge control step; and the control agent adding step includes: a control agent adding step of adding a control agent for controlling the surface charge of the one of the first group and the second group of particles to liquid containing the particles; a dispersion state measuring step of measuring a dispersion state of the one group of particles in the liquid when the control agent is added by the control agent adding step; and an addition stopping step of stopping the addition of the control agent when the dispersion state measured by the dispersion state measuring step is a desired state.

A non-claimed second structure relating to the process for producing composite particles is the first structure wherein the dispersion state measuring step is a viscosity measuring step of measuring viscosity of the liquid containing the particles; and the addition stopping step is an addition stopping step of stopping the addition of the control agent when the viscosity measured by the viscosity measuring step has a value close to a minimum.

### Advantageous Effects of Invention

According to the first structure of the present invention relating to the device for producing composite particles, upon monitoring a dispersion state of particles in liquid (a suspension) held in a reservoir tank, it becomes possible to detect whether the dispersion state of the particles is a desired state. In addition, upon stopping addition of a control agent such as a polymer electrolyte when the dispersion state of the particles is the desired state, it becomes possible to control a surface charge of the particles while suppressing the amount of the control agent added from being far larger or far smaller than a necessary amount (hereinafter sometimes simply referred to as "in excess or short"). When the desired state at this time is a state in which the particles are sufficiently highly dispersed in the liquid, this can be an index of a proper amount of a control agent being adsorbed by the particles. Therefore, upon monitoring the dispersion state of the particles and being capable of determining whether the particles are sufficiently highly dispersed, an operation to remove an excess control agent need not be performed after a surface charge of one of the first group and the second group of particles is controlled, and immediately the other group of particles can be added. Therefore, the production process can be simplified and work efficiency and production efficiency can be improved.

Here, both the groups of particles can be caused to stick to each other by electrostatic attraction by mixing one group of particles having a controlled surface charge and the other group of particles having a surface charge of opposite polarity. When surface charges of both the first group and the second group of particles are to be controlled, treatment to the other group of particles can be sequentially performed using the present device after treatment to one of the first group and the second group of particles ends. When the other group of particles have a sufficient surface charge, the treatment for controlling the surface charge of the other group of particles can be omitted.

According to the second structure of the invention relating to the device for producing composite particles, upon monitoring a dispersion state of the particles contained liquid held in each of a plurality of reservoir tanks, a surface charge of the particles can be controlled in each of the reservoir tanks while each of a plurality of control agents is suppressed from being in excess or short. Therefore, upon controlling a surface charge of a first group of particles in one of the reservoir tanks and controlling a surface charge of a second group of particles in another of the reservoir tanks, an operation to remove an excess control agent need not be performed in each of these reservoir tanks after the surface charge control, and immediately both the groups of particles can be mixed together. Here, when surface charges of the first group and the second group of particles are controlled in a single reservoir tank, operations to collect one of the first group and the second group of particles and clean the reservoir tank must be performed after controlling the surface charge of the one group of particles, and a process for producing composite particles must be carried out in a batch system. In contrast, since the present device does not need these operations, the present device enables continuous composition of the first group and the second group of particles.

According to the third structure of the invention relating to the device for producing composite particles, in addition to the advantageous effects of the first structure or the second structure, when the control agent is added to the reservoir tank by adding means, the dispersion state is sequentially stored in dispersion state storing means in response to the amount of the control agent added, and the level of particle dispersion can be determined by deriving a change in dispersion state stored in the dispersion state storing means. When it is determined from this that the dispersion state of particles in the liquid has reached a desired state, the addition of the control agent can be stopped by addition stopping means based on information output from information outputting means. Therefore, in controlling a surface charge of the first or the second group of particles, the amount of the control agent added can be optimized while monitoring the dispersion state of the particles in the liquid.

According to the fourth structure of the invention relating to the device for producing composite particles, in addition to the respective advantageous effects of any one of the first to the third structure, the dispersion state of the particles in the liquid is measured by measuring viscosity of the liquid containing the particles, and the dispersion state of the particles in the liquid is grasped by a change in the viscosity. Furthermore, whether supply of the control agent should be stopped can be determined based on measured values of viscosity.

According to the fifth structure of the invention relating to the device for producing composite particles, in addition to the advantageous effects of the fourth structure, viscosity of the liquid can be continuously measured without sampling the liquid (the liquid containing the particles) to be measured because viscosity can be measured by causing a resonator to resonate in the liquid and electrically measuring a load placed on the resonator by viscosity resistance. Since this allows continuous calculation of a change in viscosity of the liquid containing the particles (i.e., a change in dispersion state of the particles), the state of the particles in the liquid can be sequentially grasped and the supply of the control agent can be timely stopped.

According to the sixth structure of the invention relating to the device for producing composite particles, in addition to the advantageous effects of any one of the first to the fifth structure, the particles contained in the liquid in the reservoir tank and the control agent added can be stirred. This stirring allows the control agent to contact the individual particles almost uniformly and as a result allows the control agent to be uniformly adsorbed on surfaces of the particles.

According to the first non-claimed structure relating to the process for producing composite particles, while a control agent is added to liquid containing a first group or a second group of particles, a dispersion state of the particles in the liquid is monitored and when the dispersion state reaches a desired state, the supply of the control agent is stopped, and therefore the amount of the control agent for controlling a surface charge of the particles is suppressed from being in excess or short. Hence, an operation to remove an excess control agent need not be performed after the surface charge control of the particles, and as a result, a process for producing composite particles can be simplified and necessary time for executing the entire production process can be decreased. That is to say, workability and production efficiency can be improved by producing composite particles by using this production process.

According to the second non-claimed structure relating to the process for producing composite particles, in addition to the advantageous effects of the first structure, the dispersion state of particles can be grasped, and as a result timing to stop the supply of the control agent can be determined by using a change in viscosity of the liquid containing the particles. That is to say, upon continuously calculating a change in viscosity, a state in which viscosity has a value close to a minimum can be detected and the supply of the control agent can be timely stopped.

### Brief Description of Drawings

Fig. 1-2 relate to embodiments which do not fall under the scope of the invention. Fig. 3-5 and 8-17 relate to processes and also do not fall under the scope of protection of the device.
[Fig. 1] Fig. 1 is an explanatory diagram schematically illustrating a first embodiment of a device for producing composite particles.
[Fig. 2] Fig. 2 is a block diagram of the first embodiment of the device for producing composite particles.
[Fig. 3] Fig. 3 is an overview flow chart showing control for applying powder reforming treatment in the first embodiment of the device for producing composite particles.
[Fig. 4] Fig. 4 is a flow chart showing a control process for a first electrolyte adsorption treatment in the first embodiment.
[Fig. 5] Fig. 5 is a flow chart showing a control process for a second electrolyte adsorption treatment in the first embodiment.
[Fig. 6] Fig. 6 is an explanatory view schematically illustrating a second embodiment of a device for producing composite particles.
[Fig. 7] Fig. 7 is a block diagram of the second embodiment of the device for producing composite particles.
[Fig. 8] Fig. 8 is an overview flow chart showing control for composite particle production of the second embodiment of the device for producing composite particles.
[Fig. 9] Fig. 9 is a flow chart showing a control process for a first electrolyte adsorption treatment in the second embodiment.
[Fig. 10] Fig. 10 is a flow chart showing a control process for a second electrolyte adsorption treatment in the second embodiment.
[Fig. 11] Fig. 11 is an explanatory diagram schematically illustrating a process for producing composite particles.
[Fig. 12] Fig. 12 is an explanatory diagram schematically illustrating a process for producing composite particles.
[Fig. 13] Fig. 13 is an explanatory view illustrating that composite particles are being produced.
[Fig. 14] Fig. 14 is a graph showing experiment results.
[Fig. 15] Fig. 15 is an explanatory diagram showing states of a suspension derived from the experiment results.
[Fig. 16] Fig. 16 is an explanatory diagram for summarizing the experiment results.
[Fig. 17] Fig. 17 is an explanatory diagram showing states of a suspension derived from the experiment results.

### Modes for Carrying Out the Invention

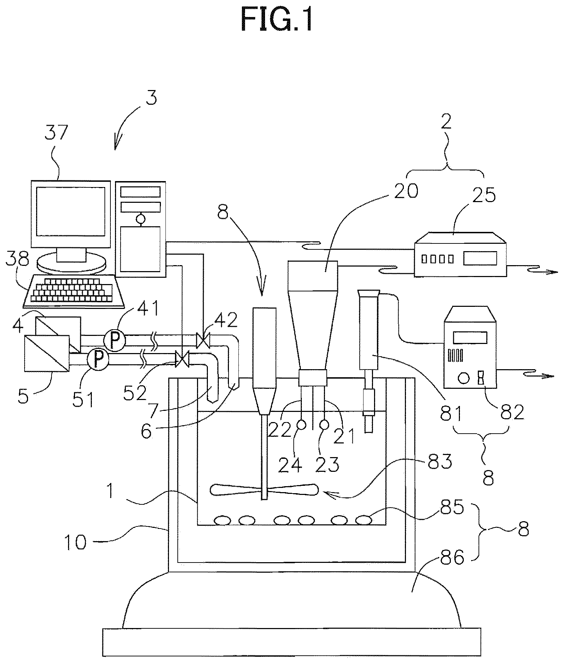

Embodiments of the present invention will be described with reference to drawings. Fig.1 is a schematic diagram for explaining a first embodiment of a device for producing composite particles. As shown in this figure, the first embodiment of the device for producing composite particles comprises a reservoir tank 1, a measuring device for measuring a dispersion state of particles in liquid (dispersion state measuring means) 2, and a control device 3 having means for storing measured data input from the measuring device 2 (dispersion state storing means), calculating means, and means for outputting a signal indicating that the dispersion state is a desired state (information outputting means). The reservoir tank 1 is installed inside a production device main body 10, and the production device main body 10 is provided with heating means and cooling means (not shown) so as to be capable of maintaining the reservoir tank 1 at a constant temperature. The reservoir tank 1 is detachably formed in the production device main body 10 and can be removed from the production device main body 10 and replaced with another one. It should be noted that what is just called "liquid" in the following description without any special condition such as excluding particles indicates liquid containing particles, and the liquid containing particles is sometimes referred to as a suspension.

The first embodiment of the production device also comprises means for adding and stopping the addition of electrolytes as control agents (adding means and addition stopping means) in order to supply the electrolytes to the reservoir tank 1. As constituents for adding the electrolytes to the reservoir tank 1, the production device comprises electrolyte tanks 4, 5 which are respectively filled with the electrolytes, supply pipes 6, 7 respectively connecting the electrolyte tanks 4, 5 and the reservoir tank 1. Electrolyte pumps 41, 51 and electromagnetic valves 42, 52 are respectively provided at intermediate positions of the supply pipes 6, 7. Upon driving the electrolyte pumps 41, 51 and opening the electromagnetic valves 42, 52, the electrolytes (the control agents) can be respectively supplied to the reservoir tank 1. This serves as adding means. On the other hand, upon stopping the electrolytes pumps 41, 51 and closing the electromagnetic valves 42, 52, the supply of the electrolytes can be stopped. This serves as addition stopping means. It should be noted that the electrolyte pumps 41, 51 and the electromagnetic valves 42, 52 can be operated not only manually but also by control based on signals output from the control device 3.

The reason why two electrolyte tanks 4, 5 are provided is to separately supply the reservoir tank 1 with two kinds of electrolytes having different properties (for example, an anionic polymer solution and a cationic polymer solution). For example, one electrolyte tank (hereinafter sometimes called the first electrolyte tank) 4 is filled with an anionic polymer solution (hereinafter sometimes called the polyanionic solution), and the other electrolyte tank (hereinafter sometimes called the second electrolyte tank) 5 is filled with a cationic polymer solution (hereinafter sometimes called the polycationic solution) . In this case, when surfaces of particles contained in liquid held in the reservoir tank 1 are to be negatively charged, it is only necessary to supply the polyanionic solution from the first electrolyte tank 4. In contrast, when the surfaces are to be positively charged, it is only necessary to supply the polycationic solution from the second electrolyte tank 5.

Supply and supply stop of the electrolyte filled in the first electrolyte tank 4 are operated by one electrolyte pump (hereinafter sometimes called the first electrolyte pump) 41 and one electromagnetic valve (hereinafter sometimes called the first electromagnetic valve) 42. Supply and supply stop of the electrolyte filled in the second electrolyte tank 5 are operated by the other electrolyte pump (hereinafter sometimes called the second electrolyte pump) 51, and the other electromagnetic valve (hereinafter sometimes called the second electromagnetic valve) 52.

The present embodiment further comprises stirring means 8 for stirring the liquid held in the reservoir tank 1. Specific examples of the stirring means 8 include an ultrasonic homogenizer 8 in which a vibration generating part 81 having a horn at its fore end converts electric energy amplified by a power supply 82 into mechanical vibration, a magnetic stirrer 8 comprising stirrer chips 85 and a stirrer body 86 which generates magnetic force, and a motor-incorporated stirring device 8 having stirring blades 83 at a fore end. In the ultrasonic homogenizer 8, electric energy amplified by the power supply 82 is converted into mechanical ultrasonic vibration by a converter of the vibration generating part 81 and transmitted to a fore end of the horn immersed in liquid. This ultrasonic vibration causes cavitation in the liquid, thereby giving an impact on a material in the liquid. The stirrer chips 85 are rotated by magnetic force of the stirrer body 86 and the rotational force of the stirrer chips 85 stirs the liquid. Such a magnetic stirrer using magnetic force is used widely. It is possible to select and use one of these kinds of stirring means 8 and it is also possible to use some or all of these kinds of stirring means 8 in combination. It should be noted that, when regarded as means for dispersing particles, the ultrasonic homogenizer 8 can be evaluated as being different in characteristics from stirring blades, which stir the entire liquid, or the like because it is used to break up aggregates of particles by ultrasonic vibration. However, the ultrasonic homogenizer 8 is included in the stirring means in the present embodiment in the respect of generating some kind of vibration.

The measuring device 2 of the present embodiment employs a dynamic viscometer capable of measuring liquid viscosity. This dynamic viscometer is designed to function upon connection of a measuring part 20 and a control part body 25. The measuring part 20 has two leaf springs 21, 22 of a tuning fork shape, resonators 23, 24 provided at fore ends of the respective leaf springs 21,22, and electromagnetic driving parts provided in the middle of the leaf springs 21, 22 which cause the leaf springs 21, 22 to resonate at a predetermined amplitude. Viscosity is measured by a difference in viscosity resistance acting on the resonators 23, 24 when the leaf springs 21, 22 resonate. The difference in viscosity resistance is detected by a displacement sensor, and liquid temperature is measured by a temperature sensor. Viscosity is derived from values of the displacement sensor and the temperature sensor by the control part body 25. Data of viscosity measured here (measured values) are output to the control device 3 through an interface.

In the present embodiment, a dispersion state of particles in liquid is grasped by using a viscometer as the measuring device 2 and monitoring a change in liquid viscosity. However, the measuring device 2 is not limited to the viscometer as long as it can measure data which allow a grasp of the dispersion state of the particles in the liquid held in the reservoir tank 1. For example, the dispersion state can be evaluated by measuring optical characteristics (turbidity, light transmittance, light scattering intensity), or electric characteristics (electric conductivity) of the suspension, or by measuring a surface charge (zeta potential) of the particles. The control agents serve to control a surface charge of the particles, and polymer electrolytes or surfactants having electric charges are used as the control agents. In this respect, a dispersion state of particles in liquid is greatly affected by a surface charge of the particles. As the surface charge of the particles is greater, the particles repel one another by electric repulsive force and as a result improve in a dispersion level. In addition, when a control agent is used, the surface charge of the particles correlates with the amount of the control agent adsorbed on surfaces of the particles and therefore the surface charge of the particles, i.e., the dispersion state of the particles serves as an indirect index of the amount of the control agent on the particle surfaces. When a sufficiently large amount of the control agent is adsorbed on the particle surfaces, the surface charge of the particles has a maximum value and in association with this, the particles in the liquid have a highest level of dispersion. Once a sufficiently large amount of the control agent is adsorbed on the particle surfaces, any more amount of the control agent is present as an excess adsorbate in the liquid without being adsorbed by the particles but the dispersion state is kept high. Since the present production device can continuously or intermittently evaluate a dispersion state while the control agent is introduced into the suspension and can detect timing when the dispersion state reaches a highest level, the present production device can detect that the control agent is adsorbed by the particles without being in excess or short.

When the above treatment is performed in a large volume, upon measuring liquid viscosity or the like at a plurality of points in the reservoir tank 1 and obtaining an average of the measured values, the average can be used as viscosity or the like of the entire liquid, which serves as an index of the dispersion state of particles. Although the viscometer 2 in the embodiment shown in Fig. 1 only has one set of a measuring part 20 and a control part body 25, in this case measuring parts 20 are increased in number and placed at different locations in the reservoir tank 1. Owing to this configuration, values measured by the respective measuring parts 20 can be input to the control part body 25 and an average can be calculated from the measured values in the control part body 25 and output as viscosity of the liquid held in the reservoir tank 1. Meanwhile, on condition of sufficient stirring, a measured value at a typical location can be used as viscosity or the like of the entire liquid, which serves as an index of the dispersion state of the particles. In this case, the number of typical locations can be only one but can also be plural so that an average of measured values can be calculated.

A relation between viscosity change and a dispersion state of particles in liquid has a tendency that the liquid has a low viscosity when the particles in the liquid are highly dispersed and the liquid has a higher viscosity with an increase in particle aggregation level. Therefore, a range in which the liquid has a lowest viscosity can be detected and timing when the particles in the liquid are highly dispersed can be grasped by monitoring viscosity change. In a case of particle surface charge control, if particles having an electric charge of one polarity is supplied with a control agent, such as a polymer electrolyte, having an electric charge of opposite polarity, aggregation of the particles proceeds and the value of viscosity increases, but upon adsorbing a larger amount of the control agent, the particles start to be more dispersed and viscosity decreases. When the viscosity has a lowest value, it can be determined that a sufficiently large amount of the control agent is adsorbed on particle surfaces. Even if the supply of the control agent is continued after that, the particles do not adsorb the control agent and the supplied control agent becomes an excess. Since this supply of the excess control agent increases liquid viscosity again, a state of liquid having a minimum viscosity is a state in which the amount of the control agent supplied is not in excess or short.

The phrase "not in excess or short" used herein is intended to fall in a range from -5% to +5% of an ideal total amount of the control agent added. That is to say, in measuring viscosity change, optical characteristics, or electric characteristics for grasping a dispersion state of particles in liquid, the phase is intended to include a slight deviation from an ideal dispersion state
caused by a measurement error of a measuring device to be used in this measurement or a temporal error of an operation to stop supply of the control agent, etc. In other words, the phrase means that there is a possibility that the control agent to be adsorbed on surfaces of the particles in the liquid may be slightly in short or slightly in excess. Numerical values obtained by experiments demonstrate that even a shortage of 5% or an excess of 5 % from a total necessary amount of the control agent does not affect subsequent processes (especially, production of final composite particles). It should be noted that in a conventional process in which an excess control agent is removed by cleaning particles after addition of the control agent, it is not uncommon that the control agent remains present on the same level.

In the present embodiment, the control device 3 controls a variety of means so as to detect a minimum value of viscosity as mentioned above and stop supply of a control agent when an appropriate amount of the control agent has been supplied.

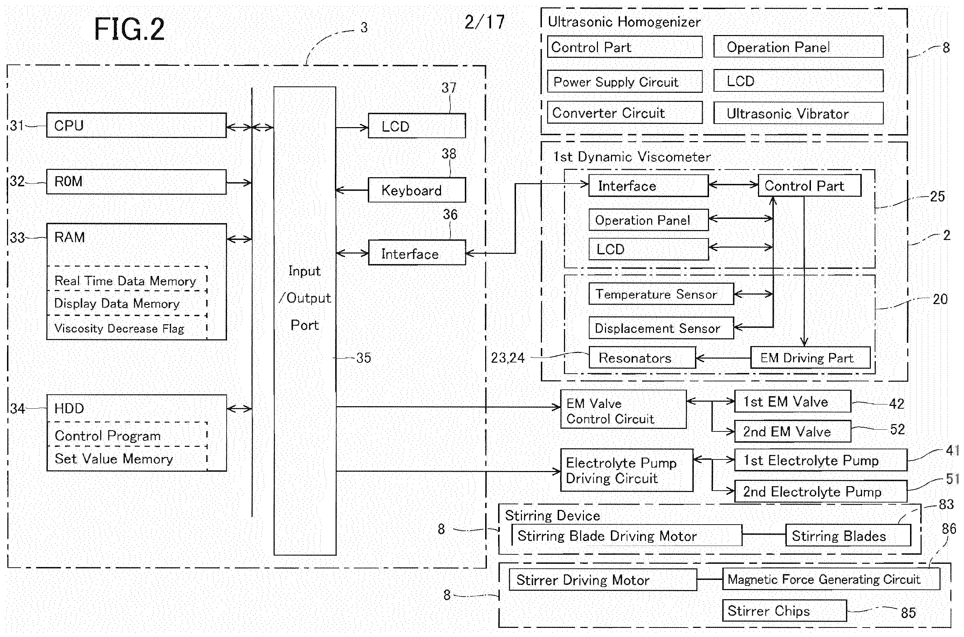

Therefore, the control device 3 will be described. Fig. 2 shows a block diagram of the control device 3. As shown in this figure, the control device 3 comprises a CPU 31, a ROM 32, a RAM 33 and a HDD 34, and these are connected to an input/output port 35 through buses. The CPU 31 has a timer circuit, and the RAM 33 has a real time data memory which stores input information in association with values of the timer circuit, a display data memory which stores data to be output to an LCD 37, a flag which holds a determination result on whether a certain condition is satisfied or not (e.g., a viscosity decrease flag mentioned later), and so on. The HDD 34 stores a control program and has a set value memory for storing a variety of set values. The set value memory stores initial setting conditions and other various kinds of conditions. For example, the set value memory can store, as default, a preset value to be used in turning on the viscosity decrease flag mentioned later, threshold values to be used in operating the electromagnetic valves 42, 52, etc.

A keyboard 38 is connected to the input/output port 35 and can be used for inputting a treatment process and various kinds of information, and, in some cases, for changing default values. The LCD 37 is also connected to the input/output port 35 and used for displaying processed data information, information in the display data memory, and so on. In addition, an interface 36 is connected to the input/output port 35 and allows data to be input to or output from peripheral equipment. In this embodiment, a first dynamic viscometer 2 as the measuring device 2 is connected to the input/output port 35 through the interface 36 as shown in Fig. 2. In addition, the control device 3 is designed to output certain signals to an electrolyte pump driving circuit and an electromagnetic valve control circuit in order to control the first electrolyte pump 41, the second electrolyte pump 51, the first electromagnetic valve 42 and the second electromagnetic valve 52.

The first dynamic viscometer 2 connected to the control device 3 comprises a control part, a displacement sensor, resonators, and an electromagnetic driving part. Under control of the control part, the resonators are designed to be vibrated by the electromagnetic driving part, and a change in vibration of the resonators (viscosity resistance) is designed to be detected by the displacement sensor. The first dynamic viscometer 2 also comprises a temperature sensor. The temperature sensor outputs temperature information of an object to be measured to the control part and the control part calculates viscosity based on information such as viscosity resistance and temperature. The first dynamic viscometer 2 also comprises an operation panel and an LCD for inputting various measurement conditions and displaying measurement results.

Stirring means 8 is prepared as an external device. One or more can be selected from a first ultrasonic homogenizer, a stirring device and a magnetic stirrer and used singly or in combination as the stirring means 8 as mentioned before. The first ultrasonic homogenizer 8 comprises a control part, a power supply circuit, a converter circuit and an ultrasonic vibrator and is designed so that under control of the control part, electric power input by the power supply circuit is converted to output power having a predetermined frequency, and this output power is converted by the converter circuit to mechanical ultrasonic vibration, which is transmitted to a target object from the ultrasonic vibrator. The first ultrasonic homogenizer 8 also comprises an operation panel and an LCD which respectively enable an input of use conditions and display of an operating condition. The stirring device 8 has a stirring blade driving motor and stirring blades. Upon being powered on, the stirring blade driving motor rotates the stirring blades 83. The magnetic stirrer has a stirrer driving motor and a magnetic force generating circuit. Upon being powered on, the stirrer driving motor causes the magnetic force generating circuit to generate necessary magnetic force. Note that stirrer chips 85 to be rotated by the generated magnetic force are provided independently of the motor and the circuit.

The abovementioned external devices are designed to be independent of the control device 3, but can be designed to be operated by operation signals from the control device 3. Furthermore, other external devices can be designed to be employed, if necessary.

With the above structure, viscosity of liquid held in the reservoir tank 1 is measured by the first dynamic viscometer 2 and upon an input of measured data into the control device 3, a change in viscosity of the liquid is calculated in the control device 3. That is to say, the control device serves as the state change deriving means. Additionally, the control device controls drive statuses of the electrolyte pumps 41, 51 and open or closed statuses of the electromagnetic valves 42, 52 in accordance with the calculated viscosity change. That is to say, the control device 3 outputs signals to start or stop the electrolyte pumps to the electrolyte pump driving circuit and then the electrolyte pump driving circuit causes the first electrolyte pump 41 and the second electrolyte pump 51 to start or stop being driven. Additionally, the control device 3 outputs signals to open or close the first electromagnetic valve 42 and the second electromagnetic valve 52 to the electromagnetic valve control circuit, and then the electromagnetic valve control circuit controls the open or closed status of the electromagnetic valves. Selection of which of the electrolyte pumps 41, 51 and the electromagnetic valves 42, 52 should be operated and timing when these should be operated are determined in accordance with results of processing in the control device 3.

As mentioned above, the control device 3 serves as information outputting means for outputting signals to operate the first electrolyte pump 41, the second electrolyte pump 51, the first electromagnetic valve 42 and the second electromagnetic valve 52. Therefore, in this case, information indicating that the dispersion state is a desired state is information indicating that viscosity has a value close to a minimum, and signals to stop the first and second electrolyte pumps and closing signals output to the electromagnetic valves correspond to such information. Moreover, since the change in viscosity calculated in the control device 3 is output to the LCD 37 as the display means, the change in viscosity can be visually confirmed. Therefore, upon inputting instructions to operate the first and second electrolyte pumps 41, 42 and the first and second electromagnetic valves 42, 52 by using the keyboard 38 as the inputting means, an operator can control these pumps and valves at any timing the operator chooses. Moreover, upon providing the pumps 41, 51, and the electromagnetic valves 42, 52 independently of the control device 3, these pumps and valves can be operated directly by hand. In such a case, viscosity data shown on the LCD 37 indicating that viscosity has a minimum value is information indicating that the dispersion state is a desired state, and the LCD corresponds to the information outputting means.

Hereinafter, a control process by the control device 3 will be described. In this embodiment, composite particles are produced through steps of electrically charging particles having an electric charge of one polarity to the other polarity, and then electrically charging the resultant particles to the original polarity. Therefore, in order to electrically charge particles having an electric charge of one polarity to different polarity, the control device 3 controls a variety of parts of the device for producing composite particles so as to supply a control agent, such as a polymer electrolyte, having opposite polarity, or sequentially supplying different kinds (two kinds) of control agents in the following example. It should be noted that from a concept of controlling a surface charge, there is no need to electrically charge particles to an inherent polarity of the particles, and it is possible to end the control process when the particles are electrically charged to either one of the polarities. In addition, in supplying any kind of control agent, supply stop of the control agent is executed by the control device 3' s determining that it is timing when viscosity has a lowest value based on measured liquid viscosity while supplying the control agent to a reservoir tank which holds the liquid containing particles, and outputting signals to stop an electrolyte pump and close an electromagnetic valve.

By the way, when a control agent having an electric charge of opposite polarity is supplied to liquid containing particles having an electric charge of a certain polarity, the particles in the liquid adsorb the control agent having the electric charge of the opposite polarity but viscosity temporarily increases during a process in which the control agent is adsorbed by the whole particles. As mentioned before this is because the particles in the liquid gradually aggregate with a decrease in a surface charge of the particles. If the control agent continues to be supplied, viscosity increases to a maximum value and then decreases. If the control agent still continues to be supplied, viscosity decreases to a minimum value and then increases again. That is to say, a change in viscosity caused by supply of the control agent follows a course of an increase, an inflection point (a maximum value), a decrease, an inflection point (a minimum value), and an increase, and thus draws a curved line having two inflection points. The control device 3 is designed to detect timing just before viscosity increases again, that is to say, timing when the viscosity change per unit time (for example, a derivative of viscosity change) changes from a negative value to a positive value. When the viscosity change per unit time (for example, a derivative of viscosity change) is close to "0" at a second inflection point after the supply of the control agent starts, the control device 3 determines that viscosity has reached a minimum value. This is because a liquid state in which the viscosity change per unit time is close to "0" at a first inflection point means that the liquid has a maximum viscosity.

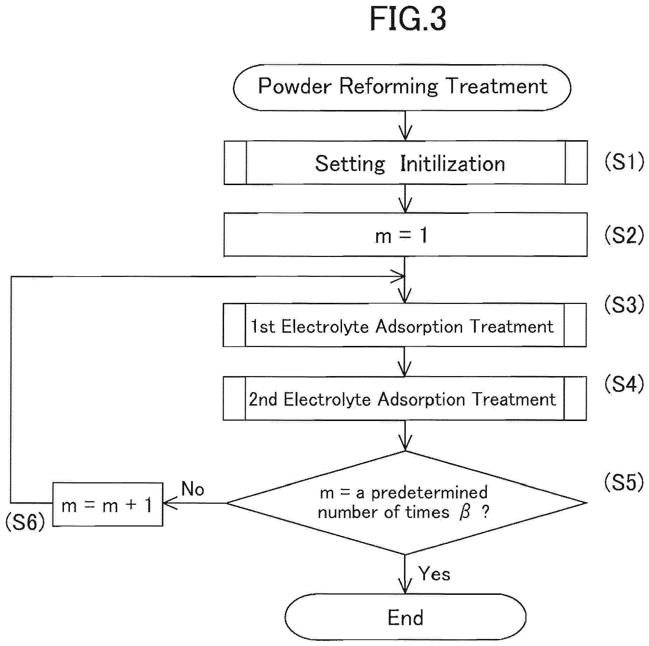

Next, a specific example of the control process will be described. Fig. 3 is a schematic flow chart showing a powder reforming treatment routine of the present embodiment to be executed by the control device 3. It should be noted that powder means a collective entity of numerous particles contained in liquid, and controlling a surface charge of individual particles of the powder is referred to as "powder reforming".

As shown in this figure, setting initialization is performed as a first step of the powder reforming treatment routine (S1). In the setting initialization, an initial state of a surface charge of powder (particles), a predetermined number of times (a β value) and so on are set as initial values. The initial values set in this setting initialization are stored in the set value memory of the HDD 34. Other set values to be used are values set as default in advance in the set value memory of the HDD 34.

Subsequently, the number of treatment times m of the surface charge of the powder (particles) is set to 1 and first powder reforming is carried out. For powder reforming, a first electrolyte adsorption treatment routine (S3) and a second electrolyte adsorption treatment routine (S4) are sequentially executed. The first electrolyte adsorption treatment routine (S3) is a routine which causes the device for producing composite particles to supply the reservoir tank 1 with an electrolyte having an electric charge of opposite polarity to an initial polarity of a surface charge of the powder (particles) and allow the control agent having the electric charge of the opposite polarity to be adsorbed on surfaces of the powder (particles), thereby electrically charging the powder to the opposite polarity to the initial polarity. On the other hand, the second electrolyte adsorption treatment routine (S4) is a routine which causes the device for producing composite particles to supply the reservoir tank 1 with an electrolyte having an electric charge of the same polarity as the initial polarity of the surface charge, thereby electrically charging the surface of the powder (particles) to the same polarity as the initial polarity. These electrolyte adsorption treatment routines (S3), (S4) will be described in detail later.

After these routines end, the control device 3 determines whether the number of treatment times m has reached an initially set number of times β or not (S5) . The predetermined number of times β is stored in the set value memory and this determination is always done when the second electrolyte adsorption treatment routine (S4) ends. Since this predetermined number of times β can be changed by an input into the keyboard by an operator in the above setting initialization (S1), the predetermined number of times β can be changed in accordance with conditions of powder to be treated, if necessary. When the control device 3 determines that the number of treatment times m is less than the predetermined number of times β, the first electrolyte adsorption treatment routine (S3) and the second electrolyte adsorption treatment routine (S4) are repeated. When the number of treatment times m reaches the predetermined number of times β, the powder reforming treatment routine ends.

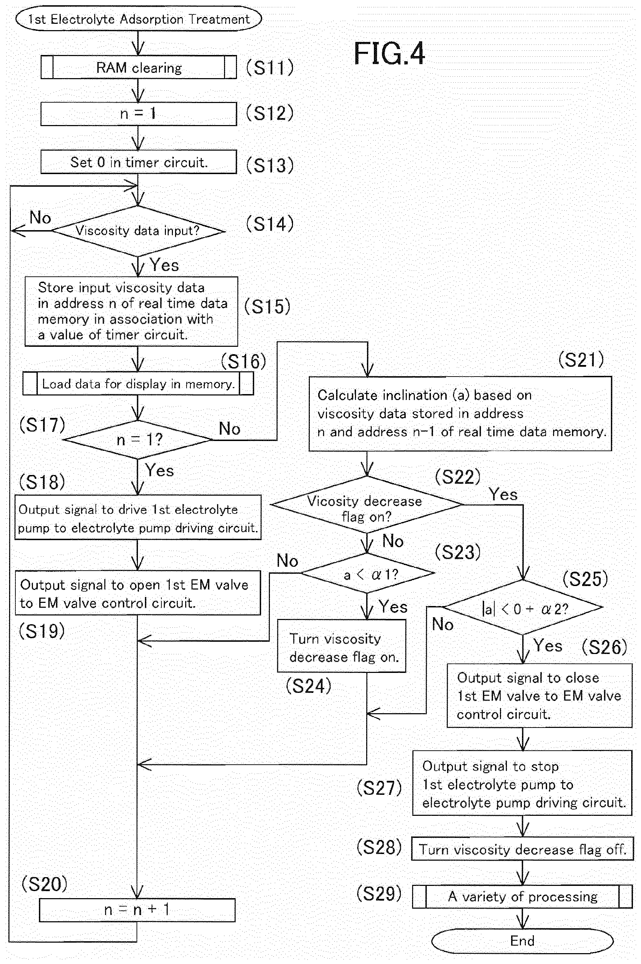

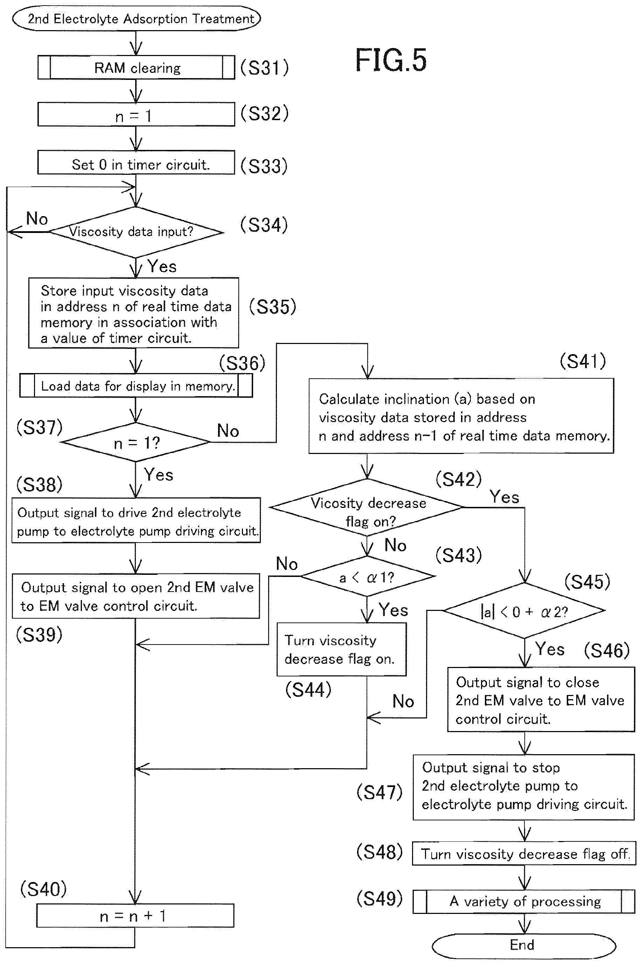

Next, the first electrolyte adsorption treatment routine (S3) and the second electrolyte adsorption treatment routine (S4) will be described in detail. A flow of the first electrolyte adsorption treatment routine is shown in Fig. 4 and a flow of the second electrolyte adsorption treatment routine is shown in Fig. 5.

As shown in Fig. 4, on start of the first electrolyte adsorption treatment routine, the control device 3 clears data in the RAM (S11), and inputs 1 in the RAM as a value of the number of viscosity measurement times (S12), and sets 0 in the timer circuit (S13). Then the control device 3 checks whether there is a first input of viscosity data from the dynamic viscometer or not (S14) . If there is no input, the control device is put in a standby mode until there is an input of viscosity data. If there is an input of viscosity data, the viscosity data at that time is stored in the real time data memory of the RAM. Specifically speaking, the input viscosity data is stored in address n (1 in this case) of the real time data memory in association with a value of the timer circuit (S15) . This value of the timer circuit is a value of the timer circuit provided in the CPU. That is to say, the timer circuit is a clock circuit which keeps time and the value of the timer circuit is updated based on clock signals of the CPU. The viscosity data stored here is initial viscosity data (data before any electrolyte is supplied) and used for comparison with subsequent viscosity data when an electrolyte is supplied.

Then data of the timer circuit and viscosity data are loaded into the memory and display data is calculated (S16) . This display data can be visually monitored by being displayed on the LCD. In addition, the control device 3 determines whether the number of viscosity measurement times is 1 or not (S17), and only when the number is 1, a signal to drive the first electrolyte pump is output to the electrolyte pump driving circuit (S18) and a signal to open the first electromagnetic valve is output to the electromagnetic valve control circuit (S19) . Thus, supply of an electrolyte is started.

On the start of the supply of the electrolyte, the control device 3 adds "1" to the value of the number of viscosity measurement times n, and checks whether there is a second input of viscosity data or not. If the control device 3 determines that there is a second input of viscosity data (S14), the input viscosity data is stored in address n (2 in this case) of the real time data memory (S15) . Then, the control device 3 determines that the number of viscosity measurement times is 2 (S17) and calculates an inclination (a) of viscosity change from this viscosity data and the last viscosity data (S21). Here, the control device 3 calculates a difference between the viscosity data stored in address 2 and the viscosity data stored in address 1 of the real time data memory, and then calculates an inclination (a) of viscosity change with respect to an increase in the amount of the electrolyte supplied. The inclination (a) of the viscosity change is an amount of viscosity change per unit time, and can be a value obtained by differentiating the value of viscosity change with respect to time.

Next, the control device 3 determines whether the viscosity decrease flag is on or not (S22) . The viscosity decrease flag is to remind that a viscosity curve has passed through a first inflection point. When this viscosity decrease flag is off, the control device 3 determines whether the above calculated inclination a is smaller than a predetermined value α1 or not (S23). The predetermined value α1 is a default value set in the set value memory, and can be appropriately set based on experimental values. However, please note that this value is set to have a greater absolute value than α2, which will be mentioned later, in order to clearly show a difference from a change value close to "0" at the second inflection point. At the second inflection point, it is desired to stop the supply of the control agent at timing when the value of viscosity change is as close to "0" as possible, because this embodiment aims to allow the control agent to be adsorbed by the particles without being in excess or short. Therefore, α2 is set to a slight value in consideration of specifications of the production device. On the other hand, if the viscosity curve passes through a first inflection point and then viscosity change in vicinity of the first inflection point is small, there is a possibility that the inclination (a) of the viscosity change may have a value close to 0 due to the smallness of the viscosity change. Therefore, if α1 is carelessly set to a small negative value close to 0, supply stop of the control agent may occur at an undesired timing. That's why the absolute value of the predetermined value α1 is set to be greater than α2 mentioned later. Besides, upon setting the predetermined value α1 to a negative value, it becomes a condition that a calculated inclination a has a negative value, and the control device 3 can determine whether viscosity is on a downward trend or not. It should be noted that when the condition that the inclination a is smaller than the predetermined value α1 is satisfied, the control device 3 turns on the viscosity decrease flag and goes to step 20 (S23), (S24) . When the condition is not satisfied, the control device 3 goes straight to step 20 (S23).

Subsequently, the control device 3 adds "1" to the number of viscosity measurement times n and stores viscosity data input for the third time (S14), (S15). The third viscosity data is compared with the second viscosity data input just before the third and an inclination a of viscosity change is calculated again (S21) . If a routine for turning on the viscosity decrease flag (S24) is not executed in the previous determination, the control device 3 repeats that routine. When the viscosity decrease flag was turned on in the previous determination, the control device 3 compares the inclination (a) with the predetermined value α2 in step 22 (S25). This predetermined value α2 is also an experimentally determined value and set as default in the set value memory. Since this step is to determine whether the value of second viscosity change is close to "0" or not, this step is to determine whether the second viscosity change has a minimum value (a lowest viscosity) or a value close to the minimum. Therefore, the value of α2 is set to an average of experimentally-derived minimum values. It should be noted that the reason why the absolute value of the inclination a is compared with the predetermined value α2 is to determine timing when viscosity change has a value close to a minimum both in a case in which the inclination of viscosity change is negative (viscosity approaches to the minimum) and in a case in which the inclination of viscosity change is positive (viscosity has just passed through the minimum).

When the above determination condition is not satisfied, the control device 3 goes again to the step 20, stores next viscosity data (S15), calculates an inclination (a) (S21), and compares the calculated inclination (a) with α2 again (S25). The control device 3 repeats this routine until this determination condition is satisfied. When the inclination (a) of viscosity change has a value close to a minimum value "0", the control device 3 outputs a signal to close the first electromagnetic valve to the electromagnetic valve control circuit (S26), and also outputs a signal to stop the first electrolyte pump to the electrolyte pump driving circuit (S27), thereby stopping the supply of the electrolyte.

The first electrolyte adsorption treatment routine is terminated by thus stopping the supply of the electrolyte, but before the end of the routine, the control device 3 turns the viscosity decrease flag to the original off position (S28), and executes a variety of processing for a next routine or routine termination (S29). The first electrolyte adsorption treatment routine is thus executed and as a result a surface charge of powder (particles) is changed to opposite polarity to the original.

Next, the second electrolyte adsorption treatment routine will be described. A flow of this routine to be executed by the control device 3 is shown in Fig. 5. As shown in this figure, the second electrolyte adsorption treatment routine is executed by a similar treatment routine to the first electrolyte adsorption treatment routine. That is to say, the control device 3 clears the RAM (S31) and sets "0" in the timer circuit (S33), and then stores a signal of viscosity data (S35) and supplies the electrolyte in the second electrolyte tank to the reservoir tank (S38), (S39), and at the same time, repeatedly stores viscosity data and monitors viscosity change by comparing a latest measured viscosity data with viscosity data just before the latest (S41)-(S45) . Then when viscosity increases and then an inclination of viscosity change has a minimum value, the control device 3 stops the supply of the electrolyte and end the routine (S45)-(S49).

The second electrolyte adsorption treatment routine is similar to the first electrolyte adsorption treatment routine as mentioned above, but the electrolyte used has an electric charge of a different polarity from that of the first electrolyte adsorption treatment, and is held in the second electrolyte tank. Therefore, in outputting a drive signal to the electrolyte pump driving circuit, the control device 3 outputs a signal to drive the second electrolyte pump (S38) . Moreover, an output signal to the electromagnetic valve control circuit is a signal to open the second electromagnetic valve (S39).

Upon execution of the first electrolyte adsorption treatment routine and the second electrolyte adsorption treatment routine as mentioned above, the surface of the powder (particles) is once electrically charged to opposite polarity to the original and then again charged to the same polarity as the original polarity of the electric charge of the surface. As mentioned before, the first electrolyte adsorption treatment routine and the second electrolyte adsorption treatment routine are executed successively and these routines are repeated until the number of treatment times reaches a predetermined number of times β. With an end of these routines, the particles in the liquid held in the reservoir tank can have a controlled surface charge. It should be noted that the particles having the controlled surface charge can be held together with the liquid or can be collected from the liquid.

In this embodiment, composite particles can be produced by mixing particles having a thus controlled surface charge (for example, called "a first group of particles") and particles having a surface charge of opposite polarity (for example, called "a second group of particles) . Mixing of both the groups of particles can be performed by mixing the treated first group of particles contained in the liquid with the second group of particles similarly contained in liquid, or by mixing together both the groups of particles which have been collected from the respective liquids. The mixing can also be performed by using either one group of particles contained in liquid and mixing the other group of particles into the liquid containing the one group of particles. The collected particles can be shaped into secondary particles by a conventional spray dry method (technique). In this case, performing a step of collecting particles and a step of spray drying successively after the end of the powder reforming treatment routine in the present embodiment facilitates formation of secondary particles by the series of steps. Besides, composite particles produced by mixing both the groups of particles which have been respectively subjected to the powder reforming treatments can be shaped into secondary particles by spray drying.

It should be noted that when the second group of particles have a desired surface charge, there is no need to apply the powder reforming treatment. In contrast, when a surface charge of the second group of particles needs to be controlled, the powder reforming treatment will be executed. A powder reforming treatment process of this case is almost similar to the above, but in order to control a treated surface charge to opposite polarity to that of the first group of particles, it is only necessary to reverse an order of the first electrolyte adsorption treatment and the second electrolyte adsorption treatment or make polarity of an electrolyte filled in each of the electrolyte tanks to an opposite.

In mixing two groups of particles together in any manner as mentioned above, one of the two groups of particles serve as mother particles, and the other group of particles serve as child particles and stick to the mother particles by electrostatic attraction, thereby forming composite particles in which the child particles almost uniformly stick to surfaces of the mother particles.

Examples of a material which can be used herein as mother particles include alumina, zirconia, silicon nitride, silicon carbide, spinel, and magnesia. Examples of a material which can be used herein as child particles include alumina, zirconia, silicon nitride, silicon carbide, aluminum nitride, carbon nanoparticles, nanodiamond, and fullerenes. Shape of these particles is not limited. The child particles should be selected in accordance with desired mechanical, thermal or other properties of composite particles.

In addition to the above, resin particles can be used as mother particles or child particles. Examples of the resin particles include particles of commodity plastics such as polyethylene, polypropylene, polystyrene, acrylonitrile styrene, polystyrene butadiene styrene, polymethyl methacrylate, and polyvinyl chloride; particles of engineering plastics such as polyacetal, polyamide, polycarbonate, modified polyphenylene ether, polybutylene terephthalate, and polyethylene terephthalate; and particles of engineering plastics such as polysulfone, polyethersulfone, polyphenylene sulfide, polyamide-imide, and polymethylpentene. Examples also include particles of phenol resin, urea resin, melamine resin, epoxy resin, diallyl phthalate resin, unsaturated polyester resin, polyimide, and polyurethane. Particles to be used as mother particles or child particles can be appropriately selected from these particles.

It should be noted that either one of the first group and the second group of particles can be mother particles. Moreover, the first group and the second groups of particles can be either of the same material or of different materials. Furthermore, each of the first group and the second group of particles can be comprised of a single kind of particles or a plurality of kinds of particles. In addition, composite particles of the first group and the second group of particles can be used as a first group or a second group of particles. Each of the first group and the second group of particles can be either primary particles or secondary particles.

Typical examples of an anionic polymer electrolyte for controlling a surface charge of these particles include polystyrene sulfonate (PSS), polyvinyl sulfate (PVS), polyacrylic acid (PAA), polymethacrylic acid (PMA). Additional examples include poly (3-thiophene acetic acid), poly (3-hexylthiophene), polyamide acid, and polyparaphenylene(-). Typical examples of a cationic polymer electrolyte for controlling a surfaces charge of the particles include poly(diallyl dimethyl ammonium chloride) (PDDA), polyethylene imine (PEI), polyvinyl amine (PVAm), and copolymer of vinylpyrrolidone and N,N-dimethylamino ethyl acrylate. Additional examples include polyallylamine, poly(diallyl dimethyl ammonium chloride), polyparaphenylene(+), polyparaphenylene vinylene, polypyrimidine acetylene, poly(p-phenylene vinylene), polypyrrole, polyaniline, polyvinyl imidazole, polydimethyl aminoethylene methacrylate, poly-1-methyl-2-vinyl pyridine, and polyimine. A solvent for these electrolytes is exemplified by water and an aqueous sodium chloride solution. These electrolytes can have a low molecular weight.

Moreover, a surfactant can be employed for the electrolyte. An anionic surfactant can be selected from fatty acid salts, sulfonic acid salts, etc. Specific examples include sodium citrate, sodium oleate, sodium laurate, lauryl sulfonate (e.g., sodium lauryl sulfonate), polyoxyalkylether sulfonate (e.g., sodium polyoxyalkylether sulfonate), α-olefin sulfonate (e.g., sodium 9-octadecenyl sulfonate), alkylarene sulfonate (e.g., sodium lauryl benzene sulfonate, sodium diisopropyl naphthalene sulfonate). Additional examples include alkyl phosphate (e.g., sodium monolauryl phosphate, monoalkyl phosphate ester, polyoxyethylene laurylether sulfate (e.g., sodium polyoxyethylene laurylether sulfate), long chain alcohol sulfate (e.g., sodium dodecyl sulfate), and N-acyl-N-methyltaurate. An cationic surfactant can be selected from quaternary ammonium salts, N-ethyl alkane amide ammonium halide and so on. Examples of the quaternary ammonium salts include tetramethyl ammonium chloride, tetraethyl ammonium chloride, tetramethyl ammonium bromide, tetraethyl ammonium bromide, diallyl dimethyl ammonium chloride, lauryl trimethyl ammonium chloride, lauryl trimethyl ammonium bromide, cetyl trimethyl ammonium bromide, cetyl trimethyl ammonium hydroxide, dilauryl dimethyl ammonium chloride, dilauryl dimethyl ammonium bromide, didodecyl dimethyl ammonium bromide, benzalkonium chloride, benzethonium chloride, and cetylpyridinium chloride.

It should be noted that the aforementioned electrolytes are just examples and electrolytes used herein are not limited to these electrolytes. Moreover, one or more of the aforementioned anionic electrolytes can be used singly or in combination thereof, and one or more of the aforementioned cationic electrolytes can be used singly or in combination thereof.

Liquid for dispersing the aforementioned particles is not limited to water. For example, an organic solvent or a mixed solvent of an organic solvent and water can be used. Examples of the organic solvent include ethanol, methanol, propanol, and acetone. Examples of composite particles to be produced by employing an organic solvent or a mixed solvent include composite particles of a material such as aluminum nitride which reacts with water to decompose, and water absorptive polymer such as sodium polyacrylate.

Moreover, when used as mother particles, the first group of particles are desirably in a range from 0.1 µm to 500 µm, and especially desirably in a range from 1 µm to 100 µm. The first group of particles in this range can not only be easily dispersed but also be easily collected by allowing the particles to settle down without using centrifugal separation and removing a clear supernatant solution.

Furthermore, the supply stop of the control agent in accordance with the dispersion state of the particles in the liquid can be executed not only by an operation signal output by the control device 3 but also by a manual operation by an operator. In this case, the operator can operate the motors and the valves while seeing viscosity data measured by the dynamic viscometer 2 and displayed on the LCD of the dynamic viscometer 2, or while checking viscosity data input from the dynamic viscometer 2 or an inclination (a) of viscosity change displayed on the LCD 37 of the control device 3.

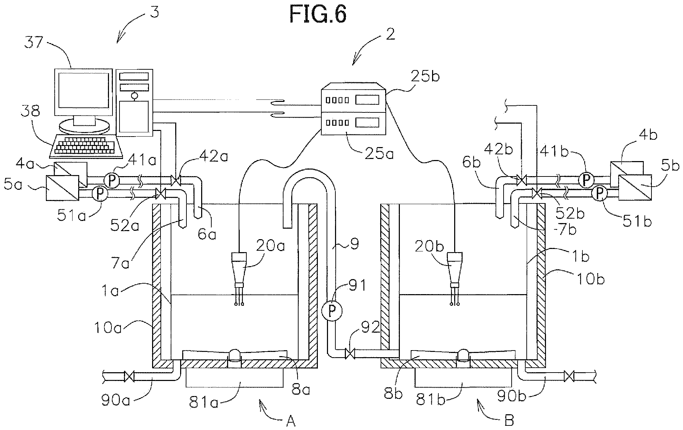

Next, a second embodiment of the device for producing composite particles will be described. Fig. 6 is a view schematically illustrating the present embodiment. As shown in this figure, the device of the present embodiment comprises two reservoir tanks 1a, 1b, two dynamic viscometers 2a, 2b, electrolyte supply pipes 6a, 7a, 6b, 7b and stirring blades 8a, 8b each having an almost similar structure to those of the first embodiment. What are constituted by these component parts are called reforming devices, and one of the reforming devices is called "a first reforming device A" and the other of the reforming devices is called "a second reforming device B". It should be noted that in the present embodiment, electrolyte tanks 4a, 5a, 4b, 5b, electrolyte pumps 41a, 51a, 41b, 51b and electromagnetic valves 42a, 52a, 42b, 52b are separately provided for a purpose of illustration, but a single component part can be used for both the reforming devices A, B. Besides, although a single control device 3 is used here, a plurality of control devices can be individually provided. For reference signs in Fig. 5, the same signs are used for the same component parts as those of the first embodiment, and the reference signs of the same kind of component parts provided similarly for both the reforming devices A, B are attached with suffixes "a" and "b", and distinguished by attaching the suffix "a" to component parts of the first reforming device A and the suffix "b" to those of the second reforming device B. Although the present embodiment shown in Fig. 6 is provided with a single control device 3 for control of the two reforming devices A, B, individual control devices can be provided for control of the two devices A and B. Moreover, although only stirring blades 8a, 8b are shown as stirring means, it is possible to employ magnetic stirrers instead of or in addition to the stirring blades 8a, 8b, and it is also possible to use ultrasonic homogenizers.

The first device A and the second device B are individually and respectively provided with a reservoir tank 1a and a reservoir tank 1b. (The reservoir tank 1a provided in the first device A is sometimes called the first reservoir tank, and the other reservoir tank 1b is sometimes called the second reservoir tank.) Viscometers 2a, 2b are respectively provided for the reservoir tanks 1a, 1b and can respectively measure viscosity of liquids held in the reservoir tanks 1a, 1b. Besides, the stirring blades 8a, 8b as stirring means are provided near bottoms and can stir liquids held in the reservoir tanks 1a, 1b. As the stirring means, it is possible to use ultrasonic homogenizers or magnetic stirrers instead of or in addition to the stirring blades 8a, 8b, as in the first embodiment.

With respect to electrolyte tanks for holding electrolytes, two electrolyte tanks 4a, 5a (one electrolyte tank 4a is called a first electrolyte tank and the other 5a is called a second electrolyte tank) are provided on a side of the first device, and for example, the first electrolyte tank 4a can hold a polyanionic solution and the second electrolyte tank 5a can hold a polycationic solution as in the first embodiment. Similarly, for holding two solutions, a first electrolyte tank 4b and a second electrolyte tank 5b are provided on a side of the second device. It should be noted that it is possible to employ a structure in which a single electrolyte tank serves both functions of the first electrolyte tanks 4a, 4b, and it is also possible to employ a structure in which a single electrolyte tank serves both functions of the second electrolyte tanks 5a, 5b.

Moreover, the electrolyte stored in the first electrolyte tanks 4a, 4b is designed to be sucked by electrolyte pumps (called first electrolyte pumps) 41a, 41b, while the electrolyte stored in the second electrolyte tanks 5a, 5b is designed to be sucked by electrolyte pumps (called second electrolyte pumps) 51a, 51b. It should be noted that when a single electrolyte tank serves functions of the first electrolyte tanks 4a, 4b, a single first electrolyte pump can be employed and when a single electrolyte tank serves functions of the second electrolyte tanks 5a, 5b, a single second electrolyte pump can be employed.

With respect to electromagnetic valves, a first electromagnetic valve 42a and a second electromagnetic valve 52a are provided for supplying electrolytes to the first reservoir tank 1a, and a third electromagnetic valve 42b and a fourth electromagnetic valve 52b are provided for supplying electrolytes to the second reservoir tank 1b. Upon opening or closing operations of these electromagnetic valves, the electrolyte stored in any one of the electrolyte tanks can be selected and at the same time either one of the first reservoir tank 1a and the second reservoir tank 1b can be selected as a tank to which the selected electrolyte is supplied. It should be noted that the electromagnetic valves 42a, 52a, 42b, 52b shown in Fig. 6 are respectively connected to individual supply pipes 6a, 7a, 6b, 7b, but in the structure in which the single electrolyte tank and the single electrolyte pump are commonly used for the devices A and B, supply pipes 6a, 7a, 6b, 7b are provided in such a manner to be branched from the commonly-used electrolyte tanks and electromagnetic valves 42a, 52a, 42b, 52b are provided in vicinity of openings of these supply pipes.

With the above structure, different groups of powder can be treated in the reservoir tanks 1a, 1b by both the devices A, B. For example, powder comprising mother particles can be subjected to reforming treatment in the device A and powder comprising child particles can be subjected to reforming treatment in the device B. Moreover, for example, the first device A can be used for reforming treatment to control a surface charge of particles to positive polarity and the second device B can be used for reforming treatment to control a surface charge of particles to negative polarity.

In the present embodiment, a transfer pipe 9 is provided which has an opening above the first reservoir tank 1a and is connected to a bottom of the second reservoir tank 1b, and liquid held in the second reservoir tank 1b can be transferred to the first reservoir tank 1a by operating a transfer pump 91 provided in a middle of the transfer pipe 9. It should be noted that the transfer pipe 9 has an electromagnetic valve (hereinafter sometimes called the fifth electromagnetic valve) 92, and transfer of liquid can be realized by actuating the transfer pump 91 and opening the fifth electromagnetic valve 92. Besides, exhaust pipes 90a, 90b are connected at the bottoms of the respective reservoir tanks 1a, 1b and allow liquid mixed in the reservoir tank 1a to be exhausted and liquid remaining in the reservoir tank 1b to be exhausted.

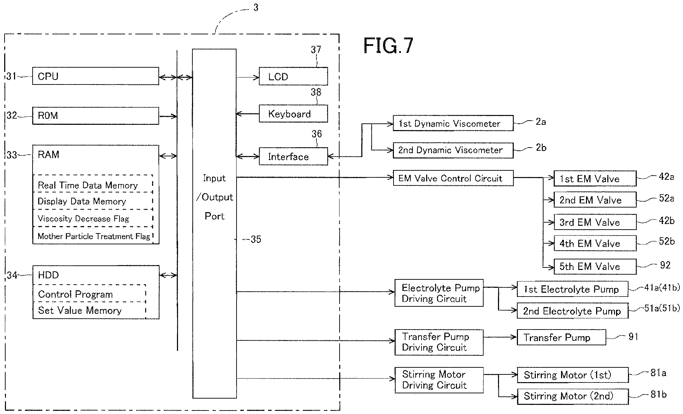

Next, structure of the control device 3 of the present embodiment will be described. Fig. 7 is an electrical block diagram of the control device 3 and other devices. As shown in this figure, internal structure of the control device 3 is almost similar to that of the first embodiment, except that a RAM 33 stores a mother particle treatment flag in addition to a viscosity decrease flag. The mother particle treatment flag is a flag for determining whether a mother particle treatment is being applied or not. When the mother particle treatment flag is on, it means that powder reforming treatment is being applied to mother particles and when the mother particle treatment flag is off, it means that powder reforming treatment is being applied not to the mother particles but to child particles. In a case where mother particles are treated in the first reforming device A and child particles are treated in the second reforming device, when the mother particle treatment flag is on, treatment is carried out in the first reforming device A, and when the mother particle treatment flag is off, treatment is carried out in the second reforming device B.

External devices connected to the control device 3 are designed to be slightly different from those of the first embodiment. That is to say, dynamic viscometers 2 for measuring viscosity of liquids in the respective reservoir tanks 1a, 1b are connected to the control device 3. Viscosity data of liquid held in the first reservoir tank 1a is measured and input to the control device 3 by a measuring part 20a and a control part body 25 of a first dynamic viscometer, while viscosity data of liquid held in the second reservoir tank 1b is measured and input to the control device 3 by a measuring part 20b and a control part body 25 of a second dynamic viscometer. An electromagnetic valve control circuit is designed to control first to fifth electromagnetic valves in a manner to cause two kinds of electrolytes to be selected and supplied to desired reservoir tanks or cause liquid in the second reservoir tank 1b to be transferred to the first reservoir tank 1a. The first electromagnetic valve 42a and the second electromagnetic valve 52a serve to open and close passages in supplying electrolytes to the first reservoir tank 1a, while the third electromagnetic valve 42b and the fourth electromagnetic valve 52b are used for supplying electrolytes to the second reservoir tank 1b. The fifth electromagnetic valve 92 serves to open or close the transfer pipe 9. In the present embodiment, the first to fifth electromagnetic valves are controlled by a single electromagnetic valve control circuit because it is supposed that operations for supply of electrolytes to the first reservoir tank 1a and operations for supply of electrolytes to the second reservoir tank 1b are sequentially performed and liquid transfer after reforming treatment is performed after the reforming treatments in both the reservoir tanks 1a, 1b end. Therefore, if these electromagnetic valves are to be simultaneously operated, a plurality of electromagnetic valve control circuits can be provided.

With regard to electrolyte pumps, a first electrolyte pump 41a (,41b) and a second electrolyte pump 51a (,51b) are provided for each of the reservoir tank 1a and the reservoir tank 1b like the electromagnetic valves, and these electrolyte pumps are sequentially operated like operations of the electromagnetic valves, and controlled by a single electrolyte pump driving circuit. Furthermore, stirring motors 81a, 81b for driving the stirring means 8 are respectively provided for the first reservoir tank 1a and the second reservoir tank 1b, and a stirring motor driving circuit for controlling these motors are designed to be actuated by a driving signal from the control device 3.

Furthermore, a transfer pump 91 is provided in the present embodiment and controlled by a transfer pump driving circuit. For its control, the control device 3 is designed to output a driving signal.

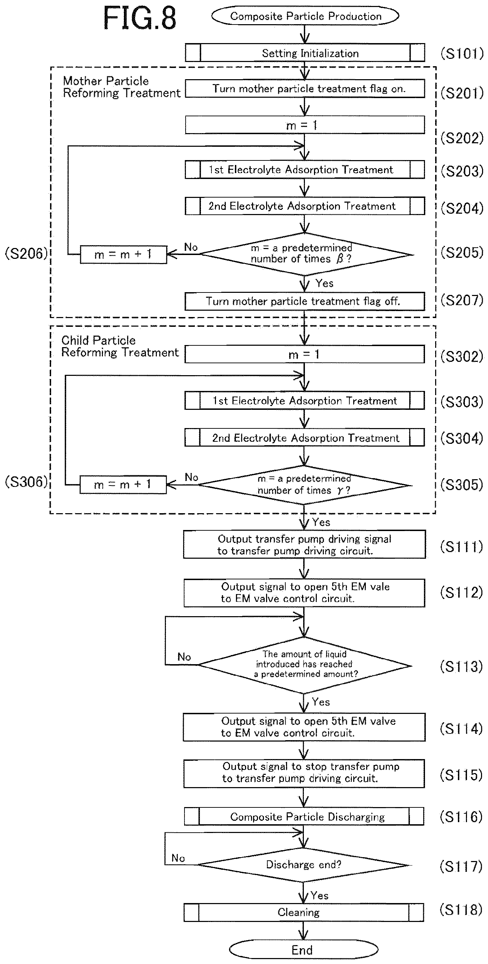

Since the device for producing composite particles has the aforementioned structure, as shown in Fig. 8, a flow of a composite particle production processing to be executed by the control device 3 of the present embodiment goes through a mother particle reforming treatment routine and a child particle reforming treatment routine and then finally executes a routine to mix both groups of particles to produce composite particles. Hereinafter, the flow will be described in detail. For the composite particle production processing, after the control device 3 executes an initial value setting routine (S101), then turns on a mother particle treatment flag (S201) and determines that the reforming treatment is to be applied in the reservoir tank on a mother particle side (the first reservoir tank) 1a, and repeats a first electrolyte adsorption treatment routine and a second electrolyte adsorption treatment routine (S202) to (S205) until the number of treatment times m reaches an initially set number of times β. When the number of electrolyte adsorption treatment times m of each of the first and second electrolyte treatments has reached the predetermined number of times β (S205), the control device 3 turns off the mother particle treatment flag and shifts from reforming treatment in the reservoir tank 1a on the mother particle side to reforming treatment in the reservoir tank on a child particle side (the second reservoir tank) 1b (S207).

Subsequently, the control device 3 starts a routine for reforming treatment in the second reservoir tank 1b. The control device 3 repeats the first electrolyte adsorption treatment routine and the second electrolyte adsorption routine until the initially set number of treatment times m reaches a predetermined number of times γ which is set as default (S303) to (S305). When the number of treatment times reaches the predetermined number of times γ, the control device 3 ends the electrolyte adsorption treatment routine. Then both the liquids in the reservoir tanks 1a, 1b are mixed together. For mixing, the control device 3 outputs a signal to drive the transfer pump 91 to the transfer pump driving circuit (S111), and also outputs a signal to open the fifth electromagnetic valve 92 to the electromagnetic valve control circuit (S112). Thus, the liquid held in the second reservoir tank 1b is sent to the first reservoir tank 1a, and both the liquids are mixed in the first reservoir tank 1a as mentioned above.

The amount of the liquid to be introduced into the first reservoir tank 1a is controlled by setting beforehand the amount of the liquid in the second reservoir tank 1b to be transferred in setting initialization (S113), and when the amount reaches a predetermined amount, the control device 3 outputs signals to close the fifth electromagnetic valve 92 and to stop the transfer pump 91 (S114) , (S115) . Owing to the introduction of the predetermined amount of liquid, the child particles stick to surfaces of the mother particles by electrostatic attraction, thereby producing composite particles. It should be noted that at this time the stirring means 8a is in operation and it is supposed that the stirring means is manually actuated. However, the operation of the stirring means 8 can be designed to be controlled by the control device 3.

After the composite particles are thus produced, composite particle-containing liquid held in the reservoir tank 1a is discharged (S116) and the control device 3 confirms whether the liquid has been discharged (S117). Then the reservoir tank 1a is cleaned (S118). The composite particles thus produced are taken out of the reservoir tank 1a and used for a desired purpose.

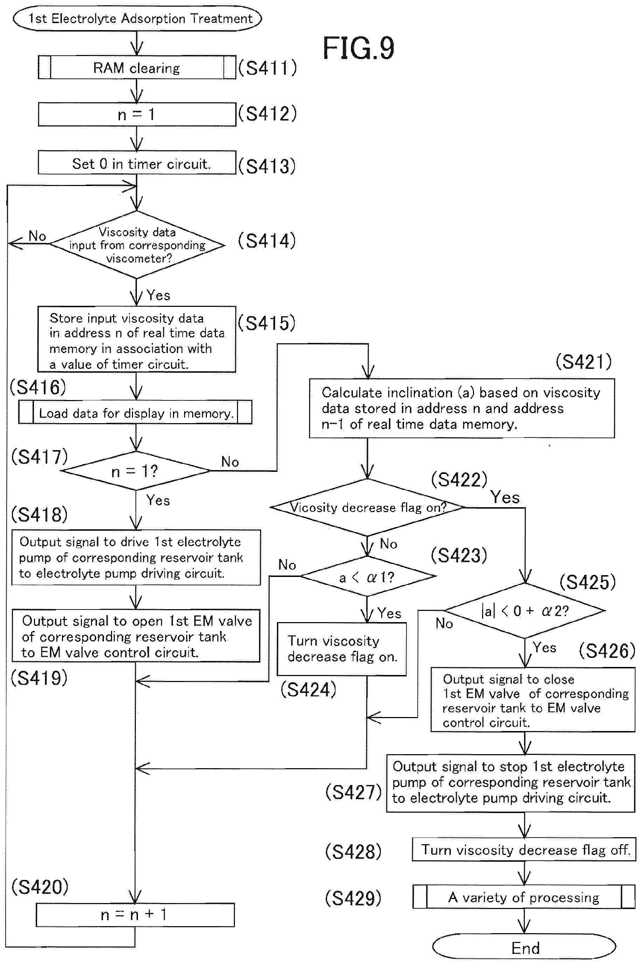

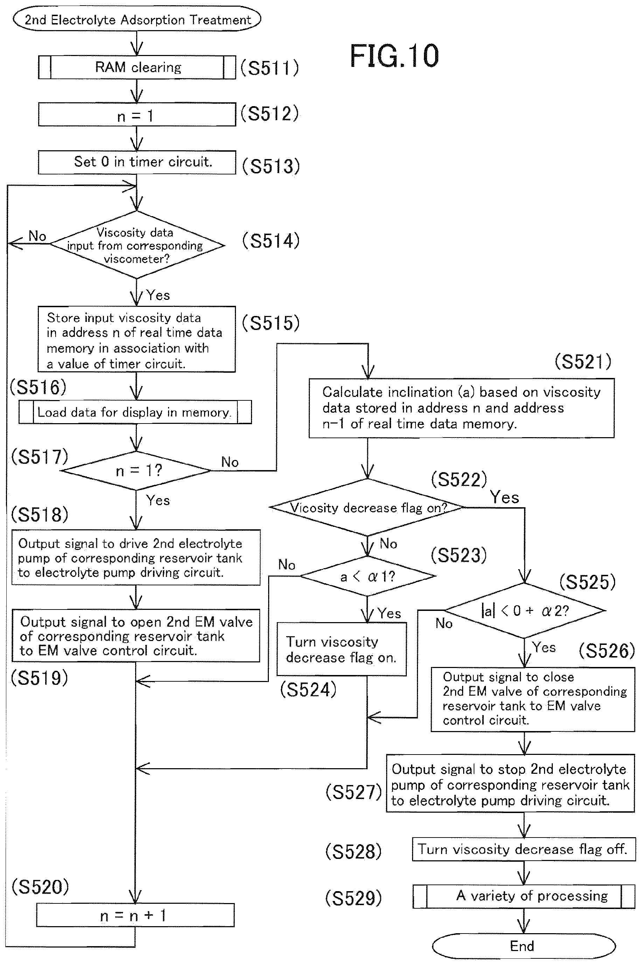

In the above treatment process, the first electrolyte adsorption treatment routine (S203) or (S303) and the second electrolyte adsorption treatment routine (S204)or (S304) are executed in each of the mother particle reforming treatment and the child particle reforming treatment. Therefore, the respective electrolyte adsorption treatment routines will be described with reference to Figs. 9 and 10.

Fig. 9 is a flow chart of control for the first electrolyte adsorption treatment routine to be executed by the control device 3. As shown in this figure, the first electrolyte adsorption treatment routine is basically similar to that of the first embodiment (see Fig. 4). That is to say, the control device 3 stores a liquid viscosity data measured by corresponding one of the dynamic viscometers in a predetermined address (S415), calculates an inclination of a change in the viscosity data (S421), and determines timing when supply of the electrolyte is to be stopped by comparing the inclination with a predetermined value (S425). It should be noted that in the above treatment routine, the control device 3 executes a routine for clearing the RAM (S411), but when the mother particle treatment flag is on, that is to say, it is the first electrolyte adsorption treatment routine in the mother particle reforming treatment (S203) (see Fig. 8), the mother particle treatment flag stored in the RAM is not cleared. The same applies to the mother particle treatment flag in the second electrolyte adsorption treatment (S204) (see Fig. 8) shown in Fig. 10.

When this first electrolyte adsorption treatment is an electrolyte adsorption treatment in the first reservoir tank 1a, a first electrolyte is to be supplied from the electrolyte tank 4a. Therefore, the first electrolyte pump 41a and the first electromagnetic valve 42a are respectively actuated by driving signals. Hence, when the number of viscosity measurement times n is "1", the control device 3 outputs a signal to drive the first electrolyte pump to the electrolyte pump driving circuit (S418), and also outputs a signal to open the first electromagnetic valve to the electromagnetic valve control circuit (S419). Furthermore, when viscosity is low and viscosity change has a value close to "0" (S425) , the control device 3 outputs a signal to close the abovementioned electromagnetic valve to the electromagnetic valve control circuit (S427) and outputs a signal to stop the electrolyte pump to the electrolyte pump driving circuit (S428) in order to end the first electrolyte adsorption treatment.

In contrast, when the first electrolyte adsorption treatment is an electrolyte adsorption treatment in the second reservoir tank 1b, the control device 3 is to output signals to open or close the third electromagnetic valve and the fourth electromagnetic valve to the electromagnetic valve control circuit. Therefore, a routine to output a valve opening signal (S519) and a routine to output a valve closing signal (S526) are respectively for the third electromagnetic valve. It should be noted that the control device 3 outputs electrolyte pump driving or stopping signals to the electrolyte pump driving circuit which controls the first and the second electrolyte pumps, but these pumps are substantially the same as the electrolyte pumps used in the first reservoir tank 1a. Hence, an overlapping description is omitted here.

As shown in Fig. 10, processing for the second electrolyte adsorption treatment is substantially similar to that of the first embodiment, except that electromagnetic valves to be controlled in order to supply or stop the supply of the electrolyte are different from that of the first embodiment. Since this difference is similar to that of the first electrolyte adsorption treatment, its detailed description is omitted here.

In the composite particle production processing executed by the control device 3 in the present embodiment, the routine for the reforming treatment of the mother particles is executed first and then the routine for the reforming treatment of the child particles is executed as mentioned above. However, the mother particle treatment routine and the child particle treatment routine can be simultaneously executed by using a plurality of reservoir tanks. That is to say, a first group of particles (for example, mother particles) can be subjected to powder reforming treatment in the reforming device A of an embodiment shown in Fig. 6, and a second group of particles (for example, child particles) can be subjected to powder reforming treatment in the reforming device B, and both the treatments in the reforming devices A, B can be simultaneously performed. In this case, in processing executed by the control device 3, this simultaneous execution can be achieved by interrupt processing. For example, in executing the mother particle reforming treatment routine and the child particle reforming treatment routine, an interrupt signal is input to cause the control device 3 to end either one of these routines.

Moreover, each of the reforming devices A, B can be provided with one control device 3 for one reservoir tank 1 as in the first embodiment (Fig. 1), so that respective powder reforming treatments in the reforming devices A, B can be designed to be individually controlled by the control devices. It should be noted that transfer of liquid containing particles from one of the reservoir tanks 1a, 1b to the other can be realized by manually driving the transfer pump and opening or closing the valve, but, for example, the control device 3 can control driving of the transfer pump 91 and the fifth electromagnetic valve 92 as shown in Fig. 6 while detecting progress of the powder reforming treatments in the respective reforming devices A, B.

In a case where driving of the transfer pump and opening or closing of the fifth electromagnetic valve are manually operated, flows of processing to be executed by the control devices 3 which are provided individually for the respective reforming devices A, B (the control device 3 in Fig. 1) are similar to those of the first embodiment shown in Figs. 3 to 5. After these routines end, the transfer pump 91 and the fifth electromagnetic valve 92 can be manually operated. On the other hand, in a case where the transfer pump 91 and the fifth electromagnetic valve 92 are controlled by the control device 3, after the treatment routines in both the reforming devices A, B end, the control device 3 executes steps after the child particle reforming routine ends (step 111 and the subsequent steps in Fig. 8) in the second embodiment are executed.

In either case where the transfer pump and the valve are manually operated or controlled by the control device, total time for applying reforming treatments to the first group of particles (the mother particles) and the second group of particles (the child particles) can be decreased by controlling surface charges of the two groups of particles in parallel. Since both the groups of particles can be mixed together immediately after the control of the surface charges of both the groups of particles end, efficiency of the composite particle production can be further improved.

Next, an embodiment relating to a process for producing composite particles will be described. The process for producing composite particles according to the present embodiment is roughly comprised of an electric charge control step and a mixing step. The electric charge control step is performed on one or both of two groups of particles to stick to each other by electrostatic attraction, thereby controlling a surface charge of the particles into a desired state, and then both the groups of particles are mixed together. Methods for mixing include mixing liquids containing the respective groups of particles together, allowing one group of particles to be contained in liquid and introducing the other group of particles into the liquid, and isolating both groups of particles respectively and then mixing those groups of particles together.

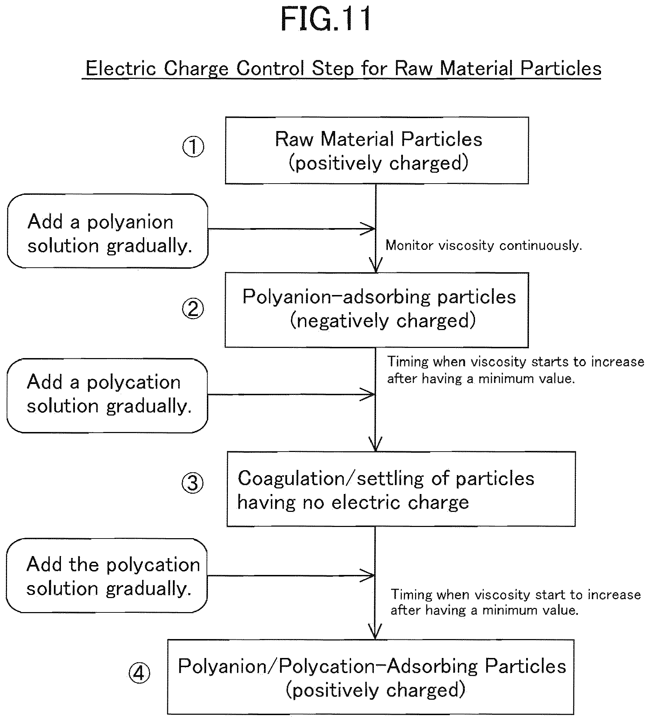

Now, the electric charge control step of the present embodiment will be described. For a purpose of illustration, a case in which raw material particles are positively charged will be described. Fig. 11 shows an electric charge control step when the raw material particles are positively charged in an initial stage. As shown in this figure, when positively charged particles having surfaces which have adsorbed polyanions first and then have adsorbed polycation (hereinafter these particles will be called "polyanion/polycation-adsorbing particles) are to be produced, a polyanion solution as a control agent is gradually added to liquid containing the raw material particles and then a polycation solution is added to the liquid (this is a control agent addition step).

First, the polyanion solution is added (a control agent addition step). Since a very start of the addition of the polyanion solution, viscosity of liquid containing the raw material particles is continuously monitored (this is a dispersion state measuring step and when only viscosity is used as an index, this is a viscosity measuring step). When it is determined from this monitoring that the particles in the liquid is most highly dispersed, in the case of viscosity measurement, when it is determined from monitoring that viscosity of the liquid decreases to a lowest value after increasing once, the supply of the polyanion solution is stopped (this is an addition stop step). With this step, the particles become polyanion-adsorbing particles.

Subsequently, a polycation solution is gradually added (this is also a control agent addition step). Owing to this addition, the polyanion-adsorbing particles adsorb polycations and gradually coagulation proceeds. In this case, too, viscosity (a dispersion state) is continuously measured (a dispersion state measuring step or a viscosity measuring step). At timing when viscosity decreases to a minimum value (or a value close to the minimum) after increasing once, the supply of the polycation solution is stopped (an addition stop step) .

In the above electric charge control step, the raw material particles are positively charged on an initial stage and upon supply of the polyanion solution, the raw material particles adsorb polyanions, gradually changing a surface charge to negative polarity. Owing to gradual supply of the polyanion solution, the raw material particles are sufficiently negatively charged, and at timing when monitored viscosity has a minimum value, the addition of the polyanion solution is stopped. The reason why the addition of the polyanion solution is stopped at timing when viscosity has a minimum value is that if the polyanion solution is still continuously added after that time, polyanions are excessively supplied to the liquid and the excessive supply increases viscosity again.

Since the particles in this state are negatively charged, next a polycation solution is supplied. Owing to the supply of the polycation solution, the raw particles adsorbs polycations and is positively charged. Also at this time, viscosity is continuously monitored, and at timing when the viscosity has a minimum value, the supply of the polycation solution is stopped.

Thus polyanion/polycation-adsorbing particles can be produced. It should be noted that when the raw material particles are negatively charged in an initial stage, upon adding a polycation solution first and then adding a polyanion solution in an opposite order to the above, particles having surfaces which have adsorbed polycations first and then have adsorbed polyanions (hereinafter these particles will be called "polycation/polyanion-adsorbing particles") can be produced. In this case, too, viscosity is continuously monitored and the addition is stopped at timing when the viscosity has a minimum value. Moreover, when raw material particles do not have a particular polarity, upon executing a routine to cause the raw material particles to adsorb an electrolyte of either one polarity first and then a routine to adsorb an electrolyte of opposite polarity, particles having an electric charge of either polarity can be produced. Moreover, raw material particles having an electric charge of either polarity beforehand can be subjected to treatment to cause the raw material particles to adsorb an electrolyte of the same polarity. In this case, the raw material particles can be sufficiently charged to the polarity. Upon causing the thus charged particles to adsorb an electrolyte of opposite polarity, a surface charge of the particles can be controlled to opposite polarity.

Although particles which have adsorbed electrolytes of different polarities for a plurality of times (have a plurality of layers) have been discussed heretofore as an example of particles having a controlled surface charge, the number of electrolyte adsorption times can be appropriately changed. Moreover, if an electric charge on particle surfaces can attain sufficiently high density by causing the particle surfaces to adsorb an electrolyte of one polarity once, the particles after surface charge control can be particles which have adsorbed the electrolyte once (have a single layer).In this case, control of a particle surface charge can be achieved by applying only one of the first electrolyte adsorption treatment and the second electrolyte adsorption treatment as in the first or the second embodiment.

These steps can be executed by the aforementioned device for producing composite particles, but when raw material particles having an electric charge of one polarity is caused to adsorb an electrolyte of the same polarity, viscosity change associated with supply of the control agent sometimes does not show a first inflection point in the treatment of the first or the second embodiment. In such a case, for example, processing can be executed by omitting a comparison of an inclination of viscosity change (a) and a predetermined value α1 and routines to turn on or off the viscosity decrease flag in the first electrolyte adsorption treatment.

Finally, composite particles are produced by using particles a surface charge of which have been controlled by any of the aforementioned various embodiments. That is to say, composite particles can be produced by mixing positively charged particles and negatively charged particles (a mixing step). In other words, upon being mixed, two groups of particles stick to each other by electrostatic attraction so that one group of particles to serve as child particles are attached on surfaces of the other group of particles to serve as mother particles.

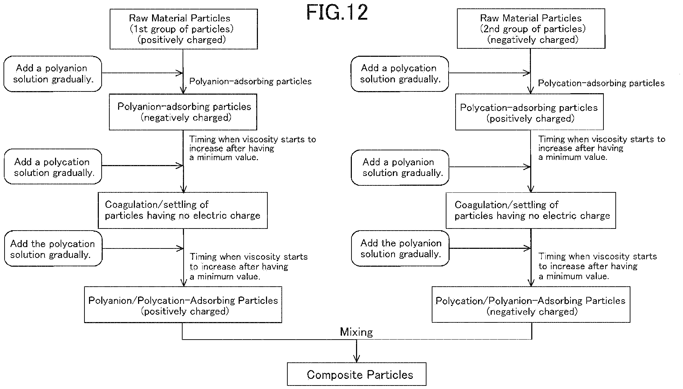

A typical example of the aforementioned production process is shown in Fig. 12. A first group of particles and a second group of particles are respectively subjected to surface charge control so that finally one group of particles (the first group of particles in Fig. 12) are positively charged and the other group of particles (the second group of particles in Fig. 12) are negatively charged. Composite particles are produced by mixing these two groups of particles.

Although a first group of particles initially having a positive charge are subjected to surface charge control and a second group of particles initially having a negative charge are subjected to surface charge control herein, this is for convenience of illustration. That is to say, sometimes a first group of particles initially having a negative electric charge can be subjected to surface charge control so as to be finally positively charged, while a polyanion solution is added to liquid containing a second group of particles initially having a positive charge, thereby forming polyanion-adsorbing particles. Moreover, in some cases, a first group of particles are finally negatively charged and in these cases, composite particles can be produced by positively charging a second group of particles and mixing the two groups of particles together. Moreover, the number of addition times of a polyanion solution or a polycation solution can be arbitrarily selected as mentioned before.

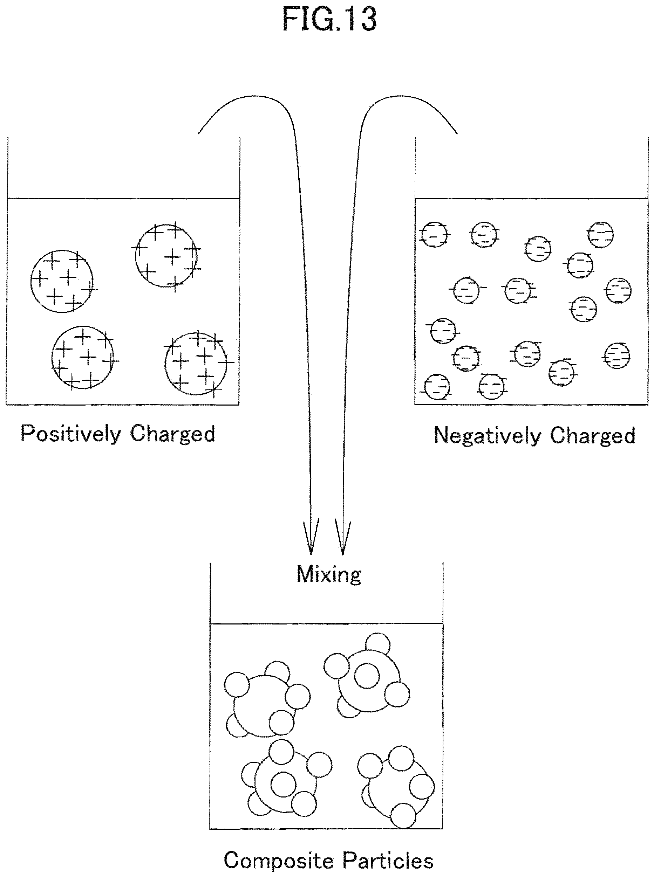

A model of mixing two groups of particles having thus controlled surface charges is shown in Fig. 13. As shown in this figure, for example, upon positively charging mother particles and negatively charging child particles and mixing both the particles together, the child particles are adsorbed on surfaces of mother particles by electrostatic attraction. Although the mother particles are positively charged and the child particles are negatively charged in this figure, the surface charges can be opposite. When either one group of the mother particles and the child particles are used as a first group of particles, the other group of particles are to be subjected to surface charge control as a second group of particles. In addition, although the mother particles and the child particles are shown in appropriate size for convenience of illustration, it is obvious that size of those particles differs depending on composite particles to be produced.

### [Experimental Examples]

Next, an experiment was conducted to study a relation between viscosity when an electric charge is controlled by the abovementioned process and zeta potential. In regard to a process of the experiment, viscosity and zeta potential were measured while gradually adding a polystyrene sulfonate (PSS) solution to liquid containing particles of alumina (α-Al₂O₃) (100 nm in diameter) . Furthermore, viscosity and zeta potential were measured while gradually adding a poly (diallyl dimethyl ammonium chloride)(PDDA) solution to the liquid containing the thus produced polyanion-adsorbing particles.

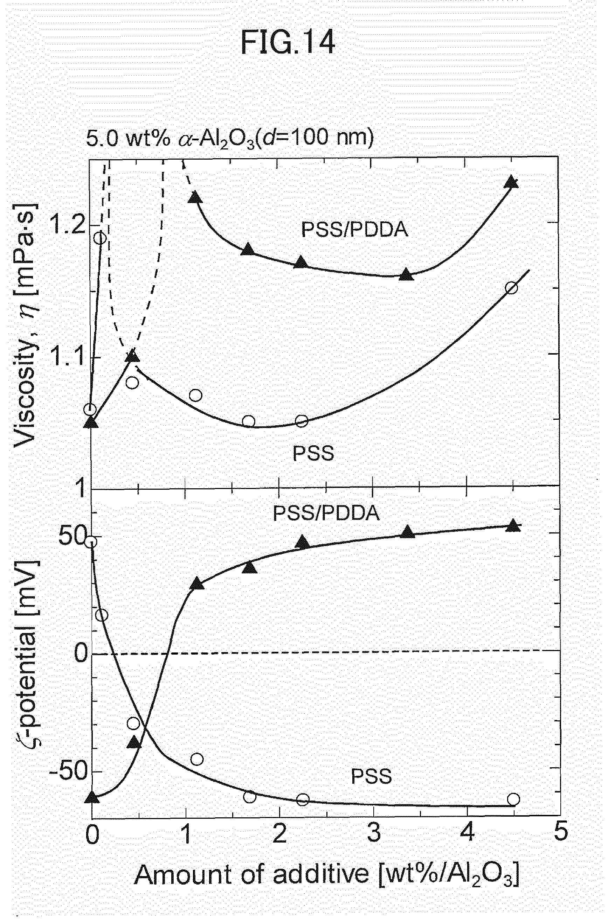

Results of the experiment are shown in Fig. 14. As shown by graphs in this figure, when polyanions (PSS) are gradually added to the particles, timing when zeta potential changes from a positive to a negative and has a value close to a minimum for the first time coincides with timing when viscosity of liquid containing the particles has a minimum value. This means that the particles are sufficiently negatively charged at timing when viscosity has a minimum value, and the fact that zeta potential shows no change in spite of continuous addition of polyanions (PSS) after that means that the amount of polyanions (PSS) added is in excess.

Similarly, when polycations (PDDA) are gradually added to liquid containing the polyanion-adsorbing particles, timing when zeta potential has a value close to a maximum for the first time coincides with timing when viscosity has a minimum value. This means that the particles are sufficiently positively charged at timing when viscosity has a minimum value.

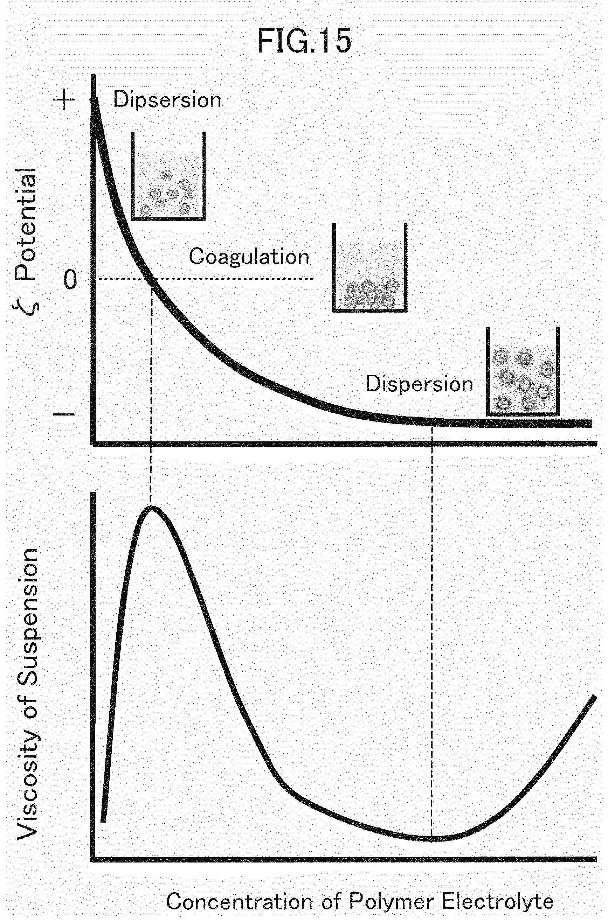

The abovementioned results are presented in a simple and easy-to-understand way in Fig. 15. This figure shows that particles initially has a positive charge and as polyanions (PSS) are gradually added, the particles get negatively charged. As shown in this figure, zeta potential initially has a high positive value and particles surfaces are positively charged and the suspension is dispersed. With continuous addition of polyanions, zeta potential becomes 0 and particles having positive surfaces and those having negative surfaces are mixedly present and adsorbed to each other, whereby the suspension coaggulates. With further addition of polyanions, zeta potential changes to a negative and particle surfaces are negatively charged and the suspension are dispersed again. After zeta potential has a negative value and reaches a value close to a minimum, viscosity of the suspension does not change in spite of addition of polyanions. This means that the polyanions are not adsorbed by the particles. Therefore, upon monitoring viscosity of liquid containing particles, timing when particles coagulate and timing when particles are dispersed can be determined by a maximum value and a minimum value of viscosity.

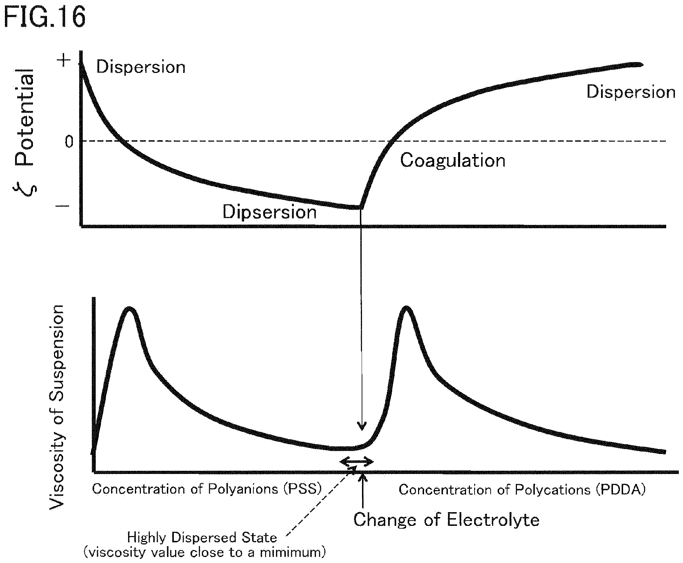

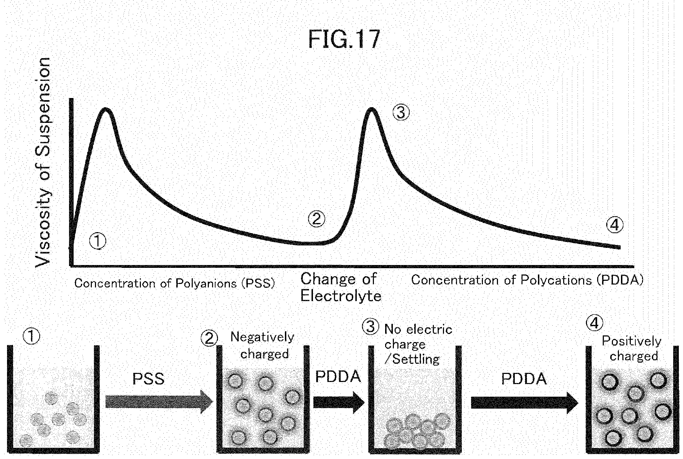

As the above experiment results show, as shown in Figs. 16 and 17, a polyanion solution or a polycation solution can be supplied without being in excess or short by monitoring viscosity of a suspension and changing the electrolyte to be added at timing when viscosity has a minimum value. If electrolyte supply and particle states are put in perspective, as shown in Figs. 16, 17, as polyanions (PPS) are supplied, a suspension which was initially dispersed gradually coagulates and gradually increases in viscosity. As the polyanions (PSS) are still continuously supplied, particles get negatively charged and the suspension shifts to a dispersion state and decreases in viscosity. Furthermore, upon changing the electrolyte to be supplied to polycations (PDDA) at timing when viscosity has a minimum value, the suspension coagulates and increases in viscosity again, but upon continuously supplying polycations (PDDA), the suspension again shifts to be in a dispersion state and also decreases in viscosity.

Therefore, it is now clear that a surface charge state of particles can be grasped by monitoring a dispersion state (viscosity in this case). It is also clear that polyanion/polycation-adsorbing particles having a sufficient positive charge can be produced without excessively supplying electrolytes by stopping supply of the electrolytes at timing when viscosity has a minimum value.

### Identification of Reference Numerals

- 1: a reservoir tank
- 2: a dynamic viscometer (dispersion state measuring means)
- 3: a control device
- 4: a first electrolyte tank
- 5: a second electrolyte tank
- 6, 7,: supply pipes
- 8: stirring means
- 41, 51: electrolyte pumps
- 42, 52: electromagnetic valves

## Claims

1. A device for producing composite particles by causing a first group of particles and a second group of particles to stick to each other by electrostatic attraction, wherein the production device comprises:
a plurality of reservoir tanks (1a, 1b) for holding liquid containing either one of the first group and the second group of particles;
dispersion state measuring means (2) for measuring a dispersion state of the particles in the liquid held in each of the reservoir tanks (1a, 1b);
wherein the dispersion state of the particles in the liquid can be measured by measuring viscosity of the liquid containing the particles, and the dispersion state of the particles in the liquid can be grasped by a change in the viscosity; and
wherein whether supply of the control agent should be stopped can be determined based on measured values of viscosity;
dispersion state storing means (33) for storing the dispersion state measured by the dispersion state measuring means (2) when each control agent for controlling a surface charge of the particles contained in the liquid in each of the reservoir tanks (1a, 1b) is added into each of the reservoir tanks (1a, 1b);
information outputting means (37) for outputting information indicating that the dispersion state of the particles in the liquid in each of the reservoir tanks (1a, 1b) is a desired state, based on the dispersion state stored in the dispersion state storing means (33);
a transfer pipe (9) for transferring liquid containing particles to be transferred from one to the other of the reservoir tank (1a) holding the liquid containing the first group of particles and the reservoir tank (1b) holding the liquid containing the second group of particles;
a transfer pump (91) for transferring the liquid containing particles to be transferred from the one reservoir tank (1a) to the other reservoir tank (1b) through the transfer pipe (9); and
driving means for driving the transfer pump (91) based on the information output by the information outputting means (37);
wherein the device further comprises:
adding means for adding the control agent to the reservoir tanks (1a, 1b);
addition stopping means for stopping the addition of the control agent by the adding means;
state change deriving means for deriving a change in the dispersion state based on the dispersion state stored in the dispersion state storing means (33); and
determining means for determining whether the dispersion state of the particles in the liquid in the reservoir tanks is the desired state based on the change in the dispersion state derived by the state change deriving means; and
the information outputting means (37) outputs, to the addition stopping means, the information indicating that the dispersion state of the particles in the liquid in the reservoir tanks (1a, 1b) is the desired state when the determining means determines that the dispersion state stored in the dispersion state storing means (33) is the desired state; and
the addition stopping means stops the addition of the control agent based on the information from the information outputting means (37);
wherein the determining means determines whether the dispersion state is the desired state by determining whether the particles in the liquid in the reservoir tanks are well dispersed, and
the information output by the information outputting means and indicating that the dispersion state is the desired state is information indicating that the particles in the liquid in the reservoir tanks (1a, 1b) are well dispersed;
wherein the dispersion state measuring means (2) is viscosity measuring means.

2. The device for producing composite particles recited in claim 1, wherein the viscosity measuring means is comprised of a dynamic viscometer (2a).

3. The device for producing composite particles recited in claim 1 or 2, wherein the production device further comprises stirring means (8) disposed in the reservoir tanks and stirring the liquid containing the particles in the reservoir tanks (1a, 1b).

## Patentansprüche

1. Vorrichtung zum Erzeugen von Verbundpartikeln, indem bewirkt wird, dass eine erste Gruppe von Partikeln und eine zweite Gruppe von Partikeln durch elektrostatische Anziehung aneinanderkleben, wobei die Erzeugungsvorrichtung aufweist:
eine Mehrzahl von Reservoirbehältern (1a, 1b) zum Halten einer Flüssigkeit, die eine von der ersten Gruppe und/oder der zweiten Gruppe von Partikeln hält,
eine Dispersionszustands-Messeinrichtung (2) zum Messen eines Dispersionszustands der Partikel in der Flüssigkeit, die in jedem der Reservoirbehälter (1a, 1b) gehalten wird;
wobei der Dispersionszustand der Partikel in der Flüssigkeit gemessen werden kann, indem eine Viskosität der Flüssigkeit, die die Partikel enthält, gemessen werden kann, und der Dispersionszustand der Partikel in der Flüssigkeit durch eine Veränderung der Viskosität erfasst werden kann; und
wobei die Notwendigkeit, ob eine Zufuhr des Steuermittels unterbrochen werden soll, basierend auf gemessenen Werten der Viskosität bestimmt werden kann;
eine Dispersionszustands-Speichereinrichtung (33) zum Speichern des Dispersionszustands, der durch die Dispersionszustands-Messeinrichtung (2) gemessen wird, wenn ein jeweiliges Steuermittel zum Steuern einer Oberflächenladung der Partikel, die in der Flüssigkeit in jedem der Reservoirbehälter (1a, 1b) enthalten sind, jedem der Reservoirbehälter (1a, 1b) zugegeben wird;
eine Informationsausgabeeinrichtung (37) zum Ausgeben von Informationen, die anzeigen, dass der Dispersionszustand der Partikel in der Flüssigkeit in jedem der Reservoirbehälter (1a, 1b) ein gewünschter Zustand ist, basierend auf dem Dispersionszustand, der in der Dispersionszustands-Speichereinrichtung (33) gespeichert ist;
eine Übertragungsleitung (9) zum Übertragen der Partikel enthaltenden Flüssigkeit, die von einem auf den anderen Reservoirbehälter (la), der die Flüssigkeit hält, die die erste Gruppe von Partikeln enthält, und Reservoirbehälter (lb), der die Flüssigkeit hält, die die zweite Gruppe von Partikeln enthält, übertragen werden soll;
eine Übertragungspumpe (91) zum Übertragen der Partikel enthaltenden Flüssigkeit, die von dem einem Reservoirbehälter (1a) auf den anderen Reservoirbehälter (1b) durch die Übertragungsleitung (9) übertragen werden soll; und
eine Antriebseinrichtung zum Antreiben der Übertragungspumpe (91) basierend auf den durch die Informationsausgabeeinrichtung (37) ausgegebenen Informationen; wobei die Vorrichtung ferner aufweist:
eine Zugabeeinrichtung zum Zugeben des Steuermittels in die Reservoirbehälter (1a, 1b);
eine Zugabeunterbrechungseinrichtung zum Unterbrechen der Zugabe des Steuermittels durch die Zugabeeinrichtung;
eine Zustandsveränderungs-Herleitungseinrichtung zum Herleiten einer Veränderung in dem Dispersionszustand basierend auf dem Dispersionszustand, der in der Dispersionszustands-Speichereinrichtung (33) gespeichert ist; und
eine Bestimmungseinrichtung zum Bestimmen, ob der Dispersionszustand der Partikel in der Flüssigkeit in den Reservoirbehältern der gewünschte Zustand ist, basierend auf der Veränderung des Dispersionszustands, der durch die Zustandsveränderungs-Herleitungseinrichtung hergeleitet wird; und
die Informationsausgabeeinrichtung (37), an die Zugabeunterbrechungseinrichtung, die Informationen ausgibt, die anzeigen, dass der Dispersionszustand der Partikel in der Flüssigkeit in den Reservoirbehältern (1a, 1b) der gewünschte Zustand ist, wenn die Bestimmungseinrichtung bestimmt, dass der Dispersionszustand, der in der Dispersionszustands-Speichereinrichtung (33) gespeichert ist, der gewünschte Zustand ist; und
die Zugabeunterbrechungseinrichtung die Zugabe des Steuermittels basierend auf den Informationen von der Informationsausgabeeinrichtung (37) stoppt;
wobei die Bestimmungseinrichtung bestimmt, ob der Dispersionszustand der gewünschte Zustand ist, indem bestimmt wird, ob die Partikel in der Flüssigkeit in den Reservoirbehältern hinreichend dispergiert sind, und
die Informationen, die durch die Informationsausgabeeinrichtung ausgegeben werden und anzeigen, dass der Dispersionszustand der gewünschte Zustand ist, Informationen sind, die anzeigen, dass die Partikel in der Flüssigkeit in den Reservoirbehältern (1a, 1b) hinreichend dispergiert sind;
wobei die Dispersionszustands-Messeinrichtung (2) eine Viskositätsmesseinrichtung ist.

2. Vorrichtung zum Erzeugen von Verbundpartikeln nach Anspruch 1, wobei die Viskositätsmesseinrichtung aus einem dynamischen Viskosimeter (2a) besteht.

3. Vorrichtung zum Erzeugen von Verbundpartikeln nach Anspruch 1 oder 2, wobei die Erzeugungsvorrichtung ferner eine Rühreinrichtung (8) aufweist, die in den Reservoirbehältern angeordnet ist und die Flüssigkeit, die die Partikel in den Reservoirbehältern (1a, 1b) enthält, verrührt.

## Revendications

1. Dispositif pour la production de particules composites par amenée d'un premier groupe de particules et d'un second groupe de particules à se coller l'un à l'autre par attraction électrostatique, dans lequel le dispositif de production comprend :
une pluralité de cuves de réservoir (1a, 1b) servant à contenir du liquide contenant l'un ou l'autre du premier groupe et du second groupe de particules ;
un moyen de mesure d'état de dispersion (2) servant à mesurer un état de dispersion de particules dans le liquide contenu dans chacune des cuves de réservoir (1a, 1b) ;
dans lequel l'état de dispersion des particules dans le liquide peut être mesuré par mesure de la viscosité du liquide contenant les particules, et l'état de dispersion des particules dans le liquide peut être saisi par un changement de viscosité ; et
dans lequel il peut être déterminé sur la base de valeurs mesurées de viscosité si l'alimentation de l'agent de commande devrait être arrêtée ;
un moyen de stockage d'état de dispersion (33) servant à stocker l'état de dispersion mesuré par le moyen de mesure d'état de dispersion (2) lorsque chaque agent de commande pour la commande d'une charge de surface des particules contenues dans le liquide dans chacune des cuves de réservoir (1a, 1b) est ajouté dans chacune des cuves de réservoir (1a, 1b) ;
un moyen de sortie d'informations (37) servant à sortir des informations indiquant que l'état de dispersion de particules dans le liquide dans chacune des cuves de réservoir (1a, 1b) est un état souhaité, sur la base de l'état de dispersion stocké dans le moyen de stockage d'état de dispersion (33) ;
un tuyau de transfert (9) servant à transférer du liquide contenant des particules à transférer d'une à l'autre de la cuve de réservoir (1a) contenant le liquide contenant le premier groupe de particules et la cuve de réservoir (1b) contenant du liquide contenant le second groupe de particules ;
une pompe de transfert (91) servant à transférer le liquide contenant des particules à transférer de l'une cuve de réservoir (1a) à l'autre cuve de réservoir (1 b) au travers du tuyau de transfert (9) ; et
un moyen d'entraînement servant à entraîner la pompe de transfert (91) sur la base des informations sorties par le moyen de sortie d'informations (37) ;
dans lequel le dispositif comprend en outre :
un moyen d'ajout servant à ajouter l'agent de commande aux cuves de réservoir (1a, 1b) ;
un moyen d'arrêt d'ajout servant à arrêter l'ajout de l'agent de commande par le moyen d'ajout ;
un moyen de dérivation de changement d'état servant à dériver un changement dans l'état de dispersion sur la base de l'état de dispersion stocké dans le moyen de stockage d'état de dispersion (33) ; et
un moyen de détermination servant à déterminer si l'état de dispersion de particules dans le liquide dans les cuves de réservoir est l'état souhaité sur la base du changement dans l'état de dispersion dérivé par le moyen de dérivation de changement d'état ; et
le moyen de sortie d'informations (37) sort, au moyen d'arrêt d'ajout, les informations indiquant que l'état de dispersion des particules dans le liquide dans les cuves de réservoir (1a, 1b) est l'état souhaité lorsque le moyen de détermination détermine que l'état de dispersion stocké dans le moyen de stockage d'état de dispersion (33) est l'état souhaité ; et
le moyen d'arrêt d'ajout arrête l'ajout de l'agent de commande sur la base des informations du moyen de sortie d'informations (37) ;
dans lequel le moyen de détermination détermine si l'état de dispersion est l'état souhaité en déterminant si les particules dans le liquide dans les cuves de réservoir sont bien dispersées, et
les informations sorties par le moyen de sortie d'informations et indiquant que l'état de dispersion est l'état souhaité sont des informations indiquant que les particules dans le liquide dans les cuves de réservoir (1a, 1b) sont bien dispersées ;
dans lequel le moyen de mesure d'état de dispersion (2) est un moyen de mesure de viscosité.

2. Dispositif de production de particules composites selon la revendication 1, dans lequel le moyen de mesure de viscosité est constitué d'un viscosimètre dynamique (2a).

3. Dispositif de production de particules composites selon la revendication 1 ou 2, dans lequel le dispositif de production comprend en outre un moyen d'agitation (8) disposé dans les cuves de réservoir et agitant le liquide contenant les particules dans les cuves de réservoir (1a, 1b).
